# EUROPÄISCHE PATENTSCHRIFT

(11) **EP 3 781 438 B1**
(45) Veröffentlichungstag und Bekanntmachung des Hinweises auf die Patenterteilung: **04.01.2023**
(21) Anmeldenummer: 19714148.4
(22) Anmeldetag: 21.03.2019
(51) Int. Cl.: B60Q 1/34, B60Q 1/46, B60Q 1/48, B60Q 9/00, B60Q 1/50, B60Q 5/00, G08G 1/16

(54) **VERFAHREN ZUR KOMMUNIKATION EINES KRAFTFAHRZEUGS MIT EINEM VERKEHRSTEILNEHMER SOWIE KRAFTFAHRZEUG ZUR DURCHFÜHRUNG DES VERFAHRENS**
METHOD FOR THE COMMUNICATION OF A MOTOR VEHICLE WITH A TRAFFIC PARTICIPANT, AND MOTOR VEHICLE FOR CARRYING OUT THE METHOD
PROCÉDÉ DE COMMUNICATION D'UN VÉHICULE AUTOMOBILE AVEC UN USAGER DE LA ROUTE ET VÉHICULE AUTOMOBILE DÉSTINÉ À LA MISE EN UVRE DE CE PROCÉDÉ

(30) Priorität: 20.04.2018 DE 102018206042
(43) Veröffentlichungstag der Anmeldung: 24.02.2021
(73) Patentinhaber: Volkswagen AG, 38440 Wolfsburg (DE)
(72) Erfinder: OTHERSEN, Ina, 28329 Bremen (DE); ROTH, Joscha, 30177 Hannover (DE); BUSSIUS, Annika, 38446 Wolfsburg (DE); WYSZKA, Robert Jan, 30165 Hannover (DE)
(86) Internationale Anmeldenummer: PCT/EP2019/057163
(87) Internationale Veröffentlichungsnummer: WO 2019/201545

(56) Entgegenhaltungen:
- EP-A1- 2 993 083
- EP-A2- 1 916 153
- WO-A1-2017/079349
- WO-A1-2017/079349
- DE-A1-102013 211 877
- DE-A1-102014 011 811
- DE-A1-102014 204 316
- DE-A1-102015 212 652
- DE-A1-102016 113 913
- DE-T5-112014 006 870
- JP-A- 2009 248 598
- US-A1- 2015 336 502
- US-A1- 2017 151 904
- US-A1- 2018 004 020
- US-A1- 2018 093 607
- US-B1- 6 300 870
- KARTHIK MAHADEVAN ET AL: "Communicating Awareness and Intent in Autonomous Vehicle-Pedestrian Interaction", HUMAN FACTORS IN COMPUTING SYSTEMS, 1. Januar 2018 (2018-01-01), Seiten 1-12, XP055530924, DOI: 10.1145/3173574.3174003 ISBN: 978-1-4503-5620-6

## Beschreibung

Die Erfindung betrifft ein Verfahren zur Kommunikation eines Kraftfahrzeugs mit einem Verkehrsteilnehmer mit den Merkmalen vom Oberbegriff des Patentanspruchs 1. Die Erfindung betrifft auch ein Kraftfahrzeug zur Durchführung des Verfahrens mit den Merkmalen vom Oberbegriff des Patentanspruchs 8.

Im Zuge der immer höher werdenden Komplexität von Verkehrsszenarien und der Interaktion zwischen Verkehrsteilnehmern ist es wünschenswert, neue Möglichkeiten der Interaktion und Kommunikation zwischen Verkehrsteilnehmern zu schaffen. Dabei ist es insbesondere wünschenswert, ein HMI-Konzept (HMI = Human Machine Interface) außerhalb des Fahrzeuges bereitzustellen, um Handlungsempfehlungen zwischen Verkehrsteilnehmern sowie die Erkennung von Intensionen zu ermöglichen. Auf diese Weise können neue Kommunikationswege für das automatisierte und auch autonome Fahren bereitgestellt werden, was eine Kooperation von Verkehrsteilnehmern im Straßenverkehr deutlich erhöht.

Der Anmelderin sind mehrere Dokumente bekannt, die die Merkmale vom Oberbegriff des Patentanspruchs 1 aufweisen.

So ist zunächst die DE 10 2016 113 913 A1 zu nennen. Dieses Dokument beschreibt eine Kommunikationsvorrichtung für ein autonomes Fahrzeug, welche Mittel zur Erzeugung von Lichtsignalen aufweist, welche auf die Fahrbahn projiziert werden. Die Lichtsignale können an nicht-autonome Verkehrsteilnehmer Informationen über den Zustand des Fahrzeugs, seine Identität und/oder über geplante oder mögliche Bewegungen des Fahrzeugs übermitteln. Die Mittel zur Erzeugung von Lichtsignalen können ein Projektionssystem oder ein scannendes System sein. Durch das Projektionssystem kann beispielsweise ein Schutzbereich auf eine Straße projiziert werden, die den Rangierbereich des Fahrzeugs während eines Einparkvorgangs kennzeichnet. Es kann ferner über eine Projektion auch ein bevorstehender Ausparkvorgang visualisiert werden. Die Kommunikationsvorrichtung kann auch ein heckseitiges Display umfassen, durch welches eine Steuerübergabe an einen Fahrer oder eine bevorstehende Bremsung signalisiert werden kann.

Ferner ist die DE 11 2014 006 870 T5 zu nennen, aus der eine Straßenoberflächenbeleuchtungseinrichtung bekannt ist, welche ein Beleuchtungsinformationseinstellungsmodul und eine Fahrzeugzustandsüberwachung aufweist. Ein Fahrzeugzustandsdetektor ist dazu ausgelegt, die Fahrtrichtung eines Fahrzeugs zu detektieren, ein für die Fahrtrichtung geeignetes Beleuchtungsmuster auszuwählen und eine Beleuchtungsvorrichtung zu veranlassen, eine Straßenoberfläche in einer von der Fahrtrichtung verschiedenen Richtung mit dem ausgewählten Beleuchtungsmuster zu beleuchten. Somit sollen Personen außerhalb des Fahrzeugs über die Fahrtrichtung des Fahrzeugs informiert werden. Die Beleuchtungsvorrichtung kann ein im Fahrzeug eingebauter Laser sein, welcher eine Fläche unter dem Fahrzeug und um das Fahrzeug herum mit sichtbarem Licht beleuchten kann.

Der DE 10 2015 212 652 A1 ist eine Vorrichtung eines teil- oder vollautomatisierten Kraftfahrzeugs zum Kommunizieren mit anderen Verkehrsteilnehmern zu entnehmen. Die Vorrichtung weist eine Anzeige zum Darstellen von Informationen auf, insbesondere der Information, dass das Kraftfahrzeug ein aktuell autonom fahrendes Kraftfahrzeug ist. Die Anzeige kann ein waagerecht um das Kraftfahrzeug umlaufender, durch LEDs/OLEDs gebildeter Lichtstreifen sein. Die Anzeige kann auch ein in der Heckscheibe angeordnetes Display sein, welche im Rahmen der Verkehrssituation das Kraftfahrzeug und andere erfasste Verkehrsteilnehmer darstellen kann.

Die WO 2017/079349 A1 beschreibt ein Verfahren zur Implementierung eines aktiven Sicherheitssystems in einem autonomen Kraftfahrzeug, welches durch eine äußere Umgebung entlang einer Trajektorie fährt. In der Umgebung können sich ein oder mehrere statische oder dynamische Objekte aufhalten, mit denen das Kraftfahrzeug kollidieren kann. Ein Objekt (bspw. ein anderes Kraftfahrzeug) kann eine Trajektorie aufweisen, die ohne eine Korrektur oder ohne ein Abbremsen des Objektes zu einer Kollision mit dem autonomen Kraftfahrzeug führen würde. Über ein Sensorsystem des Kraftfahrzeugs wird das Umfeld und mithin auch das Objekt erfasst und über ein autonomes Fahrzeugsystem wird eine Fahrstrategie zur Vermeidung oder Abmilderung der bevorstehenden Kollision berechnet. Das aktive Sicherheitssystem des autonomen Kraftfahrzeugs beinhaltet auch ein Warnsystem zur akustischen und optischen Warnung eines Kollisionsobjektes.

In der DE 10 2014 011 811 A1 wird ein Fahrzeug mit einem Beleuchtungssystem zum Informieren eines Verkehrsteilnehmers über eine geplante Bewegung des Fahrzeugs vorgeschlagen. Dies geschieht mittels Abbildung eines Lichtmusters auf einer befahrbaren Fläche. Das Lichtmuster wird insbesondere mit einem ersten Merkmal so erzeugt, dass für einen anderen Verkehrsteilnehmer erkennbar ist, dass sich das Fahrzeug in einem autonom gesteuerten Betriebsmodus befindet. Ferner ist das Beleuchtungssystem des Fahrzeugs dazu vorbereitet, das Lichtmuster mit einem zweiten Merkmal zu erzeugen, um dem Verkehrsteilnehmer mitzuteilen, dass dieser vom Fahrzeug erkannt wurde. Die genannten Merkmale können beispielsweise durch eine bestimmte Struktur, eine bestimmte Einfärbung oder auch durch eine zeitliche Veränderung des Lichtmusters realisiert werden.

Aus der DE 10 2015 115 242 A1 sind ein Fahrzeug mit einem Lichtprojektionssystem und ein Verfahren zur Erzeugung eines Sicherheitsbereichs auf einer Bodenoberfläche bekannt. Konkret weist das Fahrzeug Lichtprojektionssysteme neben, vor und hinter dem Fahrzeug auf, durch welche ein U-förmiger Linienzug auf der Bodenfläche erzeugbar ist. Durch den Linienzug wird in einem Pannenfall für einen von hinten herannahenden Verkehrsteilnehmer ein Sicherheitsbereich gebildet. Der Linienzug kann durch sequentielles Ein- und Ausschalten der einzelnen Lichtprojektionssysteme animiert werden.

In der DE 10 2015 115 240 A1 wird ebenfalls ein Fahrzeug mit einem Lichtprojektionssystem beschrieben, wobei das Lichtprojektionssystem zur Erzeugung einer Sicherheitsmarkierung auf einer Bodenoberfläche dient. Konkret wird bei Erfassung eines sich von hinten nähernden Kraftfahrzeugs auf der Bodenoberfläche ein sich längs neben dem Fahrzeug erstreckender Linienzug in roter Farbe erzeugt. Diese Vorgehensweise soll die Fahrzeuginsassen auf eine mögliche Gefahrensituation hinweisen und daran hindern, auszusteigen. Wenn sich kein Fahrzeug von hinten nähert, so wird der Linienzug in grüner Farbe dargestellt, um eine unproblematische Situation und ein mögliches Aussteigen zu signalisieren. Die Lichtprojektionssysteme weisen Mikrolinsenarrays auf.

Schließlich ist der DE 10 2015 225 409 A1 ein autonom fahrendes Fahrzeug zu entnehmen, welches einen anderen Verkehrsteilnehmer auf einer Fahrbahn durch Sensoren erfassen kann. Eine Steuereinheit des Fahrzeugs ist in der Lage, einen Teilbereich der Fahrbahn zu ermitteln, in dem dieser sich gefahrlos bewegen kann. Durch die Steuereinheit können Kommunikationsmittel des Fahrzeugs dazu veranlasst werden, eine optische Ausgabe zu generieren, durch die dem anderen Verkehrsteilnehmer der Teilbereich angezeigt wird, in dem sich der andere Verkehrsteilnehmer auf der Fahrbahn bewegen kann. Des Weiteren kann das Fahrzeug bei einem geplanten Fahrstreifenwechsel eine Bewegungstrajektorie auf die Fahrbahn projizieren und somit den anderen Verkehrsteilnehmer auf den Verlauf des geplanten Fahrstreifenwechsels hinweisen. Zur Erzeugung der optischen Ausgaben weist das Fahrzeug einen Laserscanner und eine Vielzahl von Mikroprojektoren auf.

Vor dem Hintergrund des genannten Standes der Technik liegt der vorliegenden Erfindung nun die Aufgabe zu Grunde, ein alternatives Verfahren zur Kommunikation eines autonom fahrenden Kraftfahrzeugs mit wenigstens einem anderen Verkehrsteilnehmer bereitzustellen, mit dem geplante Verkehrsmanöver des Kraftfahrzeugs, wie rückwärtiges Einparken, Ausparken und Fahrstreifenwechsel für andere Verkehrsteilnehmer verständlich visualisiert und kommuniziert werden können. Des Weiteren stellt sich die Erfindung die Aufgabe, ein geeignetes Kraftfahrzeug zur Durchführung des erfindungsgemäßen Verfahrens vorzuschlagen.

Vorgenannte Aufgaben werden durch ein Verfahren mit den Merkmalen von Patentanspruch 1 sowie durch ein Kraftfahrzeug mit den Merkmalen von Patentanspruch 8 gelöst. Vorteilhafte Weiterbildungen beziehungsweise Ausbildungen der Erfindung sind den jeweils abhängigen Ansprüchen zu entnehmen.

Hinsichtlich des Verfahrens geht die Erfindung nun von einem Verfahren zur Kommunikation eines Kraftfahrzeugs mit einem Verkehrsteilnehmer aus, welches derart erfolgt, dass der Verkehrsteilnehmer über ein geplantes Manöver des Kraftfahrzeugs informiert wird. Die Kommunikation des Kraftfahrzeugs mit dem Verkehrsteilnehmer kann auch darin bestehen, dass der Verkehrsteilnehmer darüber informiert wird, dass das Kraftfahrzeug den anderen Verkehrsteilnehmer erkannt hat. Zwecks Kommunikation wird auf einer befahrbaren Fläche und/oder auf dem Kraftfahrzeug selbst wenigstens eine optisch sichtbare Erscheinung erzeugt.

Unter einer befahrbaren Fläche soll zumindest die Fläche verstanden werden, die durch für den Verkehr vorgesehene Fahrstreifen und/oder durch Parkstreifen zur Verfügung gestellt wird.

Es wird ferner vorgeschlagen, dass die optisch sichtbare Erscheinung durch das Kraftfahrzeug bei einem beabsichtigten Wechsel des Kraftfahrzeugs in einen bestimmten Fahrstreifen einer befahrbaren Fläche oder auch bei einem beabsichtigten Wechsel von einem Fahrstreifen einer befahrbaren Fläche in einen Parkstreifen erfolgt.

Die Situation eines Wechsels in einen bestimmten Fahrstreifen einer befahrbaren Fläche tritt bei einer typischen Ausparksituation auf oder auch bei einem normalen Fahrstreifenwechsel während der Fahrt eines Fahrzeugs von einem Fahrstreifen einer befahrbaren Fläche in einen anderen. Ein Wechsel von einem Fahrstreifen einer befahrbaren Fläche in einen Parkstreifen tritt gewöhnlich bei einem Einparkvorgang auf.

Die Erzeugung der optisch sichtbaren Erscheinung durch das Kraftfahrzeug erfolgt in den genannten Situationen derart, dass auf der befahrbaren Fläche ein Lichterscheinungsbild erzeugt wird. Dieses Lichterscheinungsbild besteht aus wenigstens einem vollflächig ausgeleuchteten Lichtsegment oder aus wenigstens einer eine Fläche umgrenzenden Kontur. Ergänzend oder alternativ wird die optisch sichtbare Erscheinung auf wenigstens einer längs um das Kraftfahrzeug umlaufenden oder nahezu umlaufenden Anzeige- oder Lichterzeugungseinrichtung gebildet.

Wesentlich ist, dass die optisch sichtbare Erscheinung bei den genannten, sehr häufig auftretenden Verkehrssituationen erzeugt wird und die Kommunikation mit anderen Verkehrsteilnehmern somit speziell in diesen Verkehrssituationen spürbar verbessert wird.

Durch die Ausbildung als vollflächig ausgeleuchtete Lichtsegmente ist überdies eine äußerst gute Sichtbarkeit der optisch sichtbaren Erscheinung gewährleistet.

Die Erzeugung einer eine Fläche umgrenzenden Kontur schafft die Voraussetzung für eine hohe Flexibilität in der Kommunikation.

Schließlich wird durch die Erzeugung der optisch sichtbaren Erscheinung auf wenigstens einer längs um das Kraftfahrzeug umlaufenden oder nahezu umlaufenden Anzeige- oder Lichterzeugungseinrichtung die Voraussetzung dafür geschaffen, dass die Kommunikation in alle Winkelrichtungen um das Kraftfahrzeug erfolgen kann.

Um eine optimale Wirkung erreichen zu können, ist es zweckmäßig, wenn die genannten Alternativen der Erzeugung der optisch sichtbaren Erscheinung durch das Kraftfahrzeug in Kombination ausgeführt werden.

Gemäß einer ersten Weiterbildung wird nun vorgeschlagen, dass das wenigstens eine vollflächig ausgeleuchtete Lichtsegment von einem ein Mikrolinsenarray aufweisendes Projektionsmodul erzeugt wird. Das Mikrolinsenarray weist dabei eine Vielzahl von dicht beieinander liegenden, matrixartig angeordneten Linsen auf. Die durch die Öffnung einer Blende fallenden Lichtstrahlen einer Lichtquelle (beispielsweise Leuchtdiode) treffen dann auf jede einzelne Linse auf und werden durch diese auf einer Abbildungsfläche abgebildet. Diese Technik funktioniert also auch bei einer Verschmutzung auf Grund der hohen optischen Redundanz. In einem solchen Projektionsmodul werden vorzugsweise Hochstrom-Leuchtdioden verwendet. Hierdurch lassen sich besonders hohe Beleuchtungsstärken innerhalb der Projektionen (>1000 Lux) erzeugen. Ebenso kann ein Kontrast der Projektion größer als 4 (K > 4) realisiert werden.

Gemäß einer anderen Ausbildung des Erfindungsgedankens wird die wenigstens eine Kontur durch einen bewegten, die Kontur ständig abfahrenden Laserstrahl erzeugt. Dabei wird die Kontur durch den bewegten Laserstrahl in einer solch hohen Geschwindigkeit abgefahren, dass die Bewegung für das menschliche Auge nicht mehr wahrnehmbar ist. Die Kontur erscheint daher für den Beobachter wie eine feststehende, projizierte Kontur. Der Vorteil dieser Verfahrensweise liegt allerdings darin, dass die Sichtbarkeit insbesondere für hellere Umgebungsbedingungen (beispielsweise bei helllichtem Tag) gewährleistet werden kann, da die verfügbare optische Leistung nur auf eine kleine Fläche verteilt zu werden braucht.

Durch den bewegten, die Kontur ständig abfahrenden Laserstrahl wird obendrein die Voraussetzung dafür geschaffen, dass beliebige Vektorgraphiken, also Konturen erzeugt werden können. Um eine optimale Sicherheit für Dritte zu gewährleisten, ist es zusätzlich denkbar, die Intensität des Laserstrahls an Umkehrpunkten der Kontur zu vermindern.

Die Erfindung schlägt vor, dass bei einem beabsichtigten, rückwärtigen Einparken des Kraftfahrzeugs in einem Parkstreifen auf der dem Parkstreifen zugewandten Seite des Kraftfahrzeugs mehrere vollflächig ausgeleuchtete Lichtsegmente auf der befahrbaren Fläche erzeugt werden. Hierdurch wird für einen herannahenden Verkehrsteilnehmer die Einparkabsicht des Kraftfahrzeugs sehr verständlich visualisiert.

Ergänzend wird auf der umlaufenden Anzeigeeinrichtung zumindest heckseitig wenigstens eine auf das beabsichtigte Einparken hinweisende, optisch sichtbare Erscheinung erzeugt. Dies trägt zur Verständlichkeit der Kommunikation bei.

Zusätzlich wird zur Anzeige des beabsichtigten Einparkvorgangs durch die Anzeigeeinrichtung eine Anzeigefläche ausgebildet und die optisch sichtbare Erscheinung auf der Anzeigefläche durch einen alphanumerischen Hinweis gebildet, verbunden mit einem Aufleuchten eines dem Parkstreifen zugewandten Teils der Anzeigefläche. Auf diese Weise kann eine sehr hohe Flexibilität in der Darstellung und Verständlichkeit in der Kommunikation erreicht werden.

In einer Alternative der erfindungsgemäßen Verfahrensweise wird bei einem Einparken vorgeschlagen, dass bei einem beabsichtigten, rückwärtigen Einparken des Kraftfahrzeugs in einen Parkstreifen in einem Abstand hinter dem Kraftfahrzeug eine eine Fläche umgrenzende Kontur erzeugt wird. Der Abstand ist derart bemessen, dass im Fall eines vor der Kontur haltenden, von hinten herannahenden Verkehrsteilnehmers dem Kraftfahrzeug ausreichend Manövrierplatz zum Einparken verbleibt. Auf diese Weise werden dem Verkehrsteilnehmer unmissverständliche Handlungsanweisungen gegeben, und zwar vor der Kontur stehen zu bleiben und dem Kraftfahrzeug das Einparken zu ermöglichen.

Ergänzend wird auf der umlaufenden Anzeigeeinrichtung zumindest heckseitig wenigstens eine auf das beabsichtigte Einparken hinweisende, optisch sichtbare Erscheinung erzeugt. Somit kann die Verständlichkeit der Kommunikation erhöht werden.

Das ist in der Weise denkbar, dass durch die Anzeigeeinrichtung eine Anzeigefläche ausgebildet wird und die optisch sichtbare Erscheinung auf der Anzeigefläche durch einen alphanumerischen Hinweis gebildet wird, verbunden mit einem graphischen Richtungshinweis.

Es ist sehr zweckmäßig, wenn bei einem geplanten Einparkvorgang zusätzlich auf der Heckscheibe ein graphischer oder alphanumerischer Hinweis auf das beabsichtigte Einparken erzeugt wird.

Auch Ausparkvorgänge stellen andauernd wiederkehrende Verkehrssituationen dar. Es wird daher gemäß einer anderen Variante des erfindungsgemäßen Verfahrens vorgeschlagen, dass bei einem beabsichtigten Ausparken des Kraftfahrzeugs auf einen Fahrstreifen zumindest im Bereich eines dem Fahrstreifen zugewandten, hinteren Eckbereichs des Kraftfahrzeugs mehrere vollflächig ausgeleuchtete Lichtsegmente auf der befahrbaren Fläche erzeugt werden.

Auf diese Weise kann der nachfolgende Verkehr auch bei einer schlechten Sichtbarkeit des ausparkenden Kraftfahrzeugs beispielsweise aufgrund davor parkender Fahrzeuge sehr gut vorgewarnt und informiert werden.

Sowohl beim Aus- als auch beim Einparken kann die Signalwirkung noch dadurch verstärkt werden, indem die Lichtsegmente beispielsweise durch zeitlich veränderliches Ein- und Ausschalten der Projektionsmodule dynamisch dargestellt, also animiert werden. Zusätzlich zur Dynamik kann der Grad einer Dringlichkeit durch unterschiedliche Frequenzen und/oder durch geschickt gewählte Farbänderungen erzeugt werden.

Ergänzend wird auf der umlaufenden Anzeigeeinrichtung wiederum zumindest im hinteren Eckbereich wenigstens eine auf das beabsichtigte Ausparken hinweisende, optische Erscheinung erzeugt.

Dies erfolgt in der Weise, dass durch die Anzeigeeinrichtung eine Anzeigefläche ausgebildet wird und die optische Erscheinung auf der Anzeigefläche durch ein Aufleuchten realisiert wird.

Eine weitere Variante des erfindungsgemäßen Verfahrens schlägt vor, dass bei einem beabsichtigten Ausparken des Kraftfahrzeugs auf einen Fahrstreifen auf der neben dem Kraftfahrzeug befindlichen befahrbaren Fläche des Fahrstreifens Konturen erzeugt werden, die einen herannahenden Verkehrsteilnehmer auf das beabsichtigte Ausparken des Kraftfahrzeugs hinweisen und zugleich zum Einfahren in die frei werdende Parklücke einladen.

Auf diese Weise kann ein hohes Maß an Kommunikation und "Höflichkeit" in einer solchen Situation erzielt werden.

Dabei wird zusätzlich die Geschwindigkeit des herannahenden Verkehrsteilnehmers vom Kraftfahrzeug gemessen und die zum Einfahren in die Parklücke einladenden Konturen werden nur dann erzeugt, sobald die Geschwindigkeit des Verkehrsteilnehmers einen bestimmten Grenzwert unterschreitet. Somit werden die Konturen nur dann erzeugt, wenn es auch wirklich Sinn macht und eine Haltebereitschaft beziehungsweise eine Einparkabsicht des anderen Verkehrsteilnehmers wirklich besteht.

Auch Fahrstreifenwechsel stellen häufige Standardsituationen im Straßenverkehr dar. Daher wird gemäß einer weiteren Variante des erfindungsgemäßen Verfahrens vorgeschlagen, dass bei einem während der Fahrt beabsichtigten Fahrstreifenwechsel des Kraftfahrzeugs auf einen anderen Fahrstreifen zumindest im Bereich eines dem anderen Fahrstreifen zugewandten, hinteren Eckbereichs des Kraftfahrzeugs mehrere vollflächig ausgeleuchtete Lichtsegmente auf der befahrbaren Fläche erzeugt werden. Hierdurch kann einem rückwärtigen Verkehrsteilnehmer auf sehr intuitive Weise ein beabsichtigter Fahrstreifenwechsel des Kraftfahrzeugs angezeigt werden. Dabei ist es auch hier denkbar, die Lichtsegmente dynamisch zu bewegen, um den Aufmerksamkeitsgrad noch weiter zu erhöhen.

Ergänzend wird auf der umlaufenden Anzeigeeinrichtung zumindest in einem dem anderen Fahrstreifen zugewandten, hinteren Bereich wenigstens eine auf den beabsichtigten Fahrstreifenwechsel hinweisende, optische Erscheinung erzeugt.

Dies erfolgt derart, dass durch die Anzeigeeinrichtung eine Anzeigefläche ausgebildet wird und die optische Erscheinung auf der Anzeigefläche durch ein Aufleuchten gebildet wird. Dies alles trägt zur Flexibilität und guten Wahrnehmbarkeit der Kommunikation bei.

Gemäß noch einer anderen Variante des erfindungsgemäßen Verfahrens wird bei einem während der Fahrt beabsichtigten Fahrstreifenwechsel des Kraftfahrzeugs auf einen anderen Fahrstreifen auf diesem Fahrstreifen neben dem Kraftfahrzeug eine Kontur erzeugt. Der Umriss der Kontur entspricht in etwa dem Umriss des Kraftfahrzeugs.

Auf diese Weise kann sehr anschaulich die Fahrstreifenwechselabsicht des Kraftfahrzeugs für andere Verkehrsteilnehmer veranschaulicht werden. Auf dem anderen Fahrstreifen wird sozusagen der Platz für das wechselnde Kraftfahrzeug "blockiert".

Wiederum ergänzend wird dann auf der umlaufenden Anzeigeeinrichtung zumindest heckseitig wenigstens eine auf den beabsichtigten Fahrstreifenwechsel hinweisende, optische Erscheinung erzeugt.

Es ist dabei denkbar, dass durch die Anzeigeeinrichtung eine Anzeigefläche ausgebildet wird und die optische Erscheinung auf der Anzeigefläche durch einen alphanumerischen Hinweis gebildet wird. Zur weiteren Erhöhung der Verständlichkeit für andere Verkehrsteilnehmer ist auch denkbar, dass auf der Heckscheibe ein graphischer oder alphanumerischer Hinweis auf den beabsichtigten Fahrstreifenwechsel erzeugt wird.

Wie anfangs erwähnt, soll mit der Erfindung auch ein Kraftfahrzeug zur Durchführung des erfindungsgemäßen Verfahrens bereitgestellt werden.

Ein solches Kraftfahrzeug weist mehrere, um das Kraftfahrzeug herum angeordnete Projektionsmodule auf. Jedes der Projektionsmodule ist mit wenigstens einem Mikrolinsenarray versehen. Durch jedes einzelne Projektionsmodul ist auf einer befahrbaren Fläche neben dem Kraftfahrzeug ein vollflächig ausgeleuchtetes Lichtsegment erzeugbar. Somit ist durch die Gesamtheit aller Projektionsmodule ein das Kraftfahrzeug umschließendes, aus den Lichtsegmenten bestehendes Lichterscheinungsbild erzeugbar. Ergänzend sind mehrere Laserscanner, vorzugsweise sogenannte Galvoscanner vorhanden. Durch jeden einzelnen Laserscanner sind ein bewegter Laserstrahl und damit beliebige Flächen umspannende Konturen auf der befahrbaren Fläche neben dem Kraftfahrzeug erzeugbar. Dabei sind durch die Laserscanner die Konturen an verschiedenen Winkelpositionen um das Kraftfahrzeug herum erzeugbar.

Ergänzend ist das Kraftfahrzeug auch mit einer längs um das Kraftfahrzeug umlaufenden oder nahezu umlaufenden Anzeige- und/oder Lichterzeugungseinrichtung versehen. Die Anzeige- und/oder Lichterzeugungseinrichtung kann zweckmäßigerweise als Matrix-LED-Display mit einer Vielzahl von matrixartig angeordneten LEDs (Leuchtdioden) und/oder als einfacher LED-Streifen ausgebildet sein. Es ist denkbar, dass sowohl ein umlaufendes Matrix-LED-Display als auch ein umlaufender LED-Streifen vorhanden sind.

All diese Maßnahmen tragen dazu bei, dass die Kommunikation des Kraftfahrzeugs mit anderen Verkehrsteilnehmern höchst flexibel und in alle Winkelrichtungen um das Kraftfahrzeug herum erzeugt werden kann. Somit ist ein Höchstmaß an Kommunikationsfähigkeit, auch bei schwer einsehbaren Positionen des Kraftfahrzeugs für andere Verkehrsteilnehmer möglich.

Mehrere Ausführungsbeispiele sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein zur Durchführung des Verfahrens hergerichtetes Kraftfahrzeug, aus der Vogelperspektive,
- Fig. 2: die Darstellung eines eingesetzten Projektionsmoduls,
- Fig. 3: die Darstellung eines eingesetzten Laserscanners,
- Figuren 4: eine perspektivische Ansicht des Kraftfahrzeugs zur Darstellung der längs um das Kraftfahrzeug umlaufenden Anzeigeeinrichtung,
- Fig. 5: eine erste Ausparksituation,
- Fig. 6: eine zweite Ausparksituation,
- Fig. 7: eine erste Einparksituation,
- Fig. 8: eine zweite Einparksituation,
- Fig. 9: eine erste Fahrstreifenwechsel-Situation,
- Fig. 10: eine zweite Fahrstreifenwechsel-Situation,
- Fig. 11: die Darstellung einer bevorstehenden Türöffnung, in einer ersten Ausführungsform,
- Fig. 12: die Darstellung einer beabsichtigten Türöffnung, in einer zweiten Ausführungsform,
- Fig. 13: die Darstellung eines auf der Windschutzscheibe erzeugten Symbols,
- Fig. 14: die Darstellung einer Abbiegeintension des Kraftfahrzeugs, in einer ersten Ausführungsform,
- Fig. 15: die Darstellung einer Abbiegeintension des Kraftfahrzeugs, in einer zweiten Ausführungsform,
- Fig. 16: eine Verkehrssituation an einem Zebrastreifen, in einer ersten Phase,
- Fig. 17: eine Verkehrssituation an einem Zebrastreifen, in einer zweiten Phase und
- Fig. 18: die Darstellung einer Kommunikation des Kraftfahrzeugs mit einem die eigene Fahrbahn kreuzenden, schwächeren Verkehrsteilnehmer.

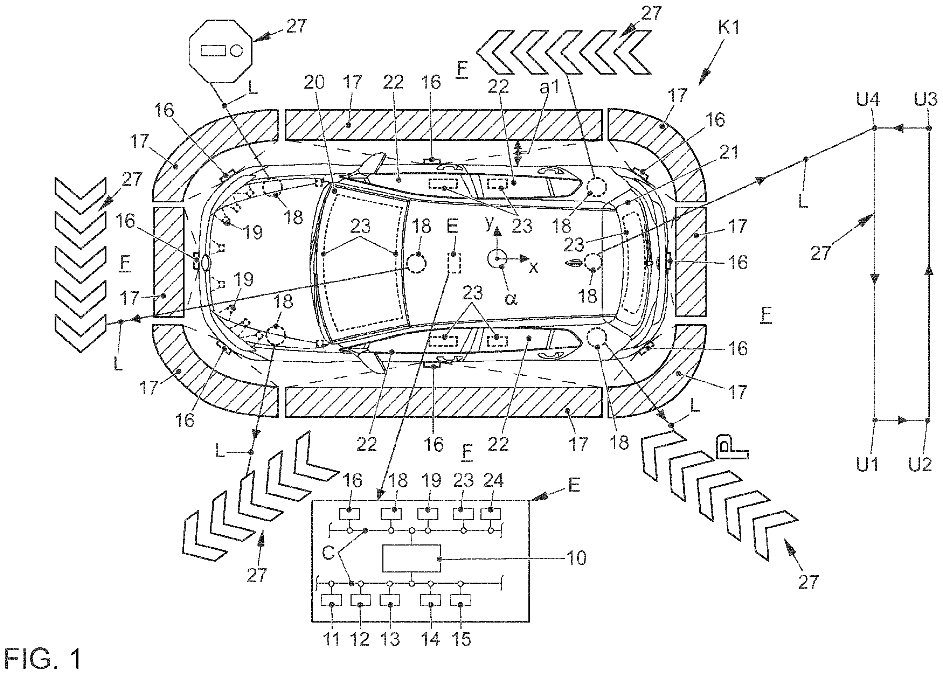

Zunächst wird auf die Fig. 1 Bezug genommen. Darin ist ein Kraftfahrzeug K1 ersichtlich, welches zur Durchführung des Verfahrens hergerichtet ist. Bei dem Kraftfahrzeug K1 handelt es sich im Ausführungsbeispiel um ein Kraftfahrzeug, welches zumindest teilautomatisiert (Stufe 2 nach SAE J 3016) fahren kann. Es ist aber auch denkbar, das erfindungsgemäße Verfahren in Zusammenhang mit höheren Automatisierungsstufen, bis hin zum vollautomatisierten Fahren (Stufe 5 nach SAE J 3016) einzusetzen. Auch der Einsatz bei niedrigeren Automatisierungsstufen ist durchaus vorstellbar.

So weist das Kraftfahrzeug K1 eine Steuerungselektronik E auf, welche zur leichteren Darstellbarkeit aus dem Kraftfahrzeug "herausgezogen" ist. Allerdings sind nur die Komponenten dargestellt, die für das Verständnis der Erfindung von Interesse sein können.

So weist die Steuerungselektronik E eine zentrale Auswerte- und Steuereinrichtung 10 auf. Über einen Datenbus C, welcher beispielsweise ein CAN-Datenbus ist, ist die Auswerte- und Steuereinrichtung 10 signaltechnisch mit einer Objekt- und Umfelderfassungseinrichtung 11 (beispielsweise ein Radar- und Kamerasystem), mit Radsensoren 12, mit Abstandssensoren 13, mit einem Fahrtrichtungshebel 14 zum Setzen eines Fahrtrichtungsanzeigers und mit einem Lenkwinkelsensor 15 verbunden.

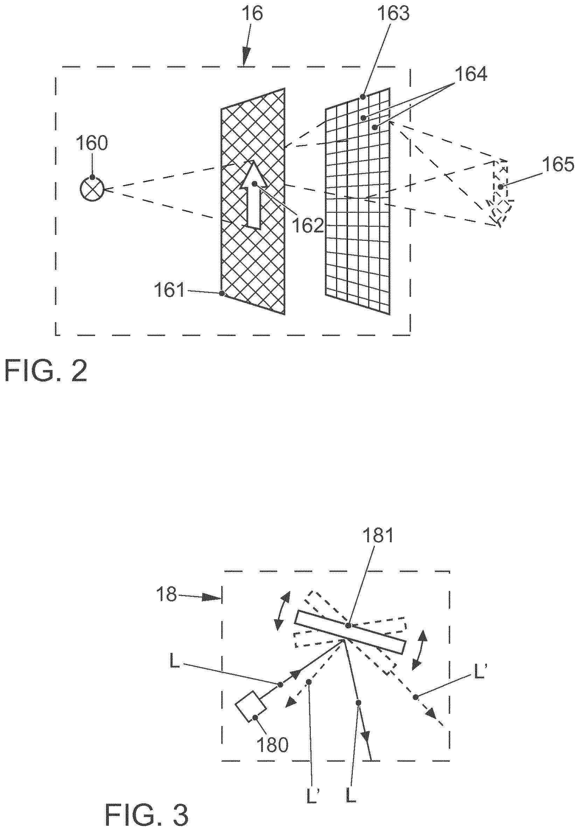

Des Weiteren sind in Längsrichtung des Kraftfahrzeugs K1, um das Kraftfahrzeug K1 herum mehrere Projektionsmodule 16 angeordnet. Jedes der Projektionsmodule 16 (vergleiche hierzu auch Fig. 2) ist in der Lage, in einem bestimmten Abstand a1 vom Kraftfahrzeug K1 ein Lichtsegment 17 auf eine befahrbare Fläche F zu projizieren.

Die befahrbare Fläche F wird in der Regel Bestandteil eines Fahrstreifens oder eines Parkstreifens einer hier nicht näher dargestellten Straße sein.

Insbesondere ist das erzeugte Lichtsegment 17 ein vollflächig ausgeleuchtetes Lichtsegment, wodurch es eine hohe Helligkeit und einen hohen Kontrast zur Umgebung aufweisen kann. Durch die vollflächige Ausleuchtung ist somit eine sehr gute Wahrnehmung des Lichtsegmentes 17 durch andere Verkehrsteilnehmer möglich.

Der Abstand a1 beträgt einige Zentimeter und kann vorzugsweise in einem Bereich von etwa 20 Zentimeter bis etwa 80 Zentimeter liegen.

Jedes Projektionsmodul 16 weist eine vorzugsweise als Leuchtdiode ausgebildete Lichtquelle 160 auf (Fig. 2). Der Lichtquelle 160 ist eine Blende 161 mit einer Öffnung 162 optisch nachgeschaltet. Die Öffnung 162 weist einen solchen Umriss auf, wie er als gewünschtes Lichtsegment 17 später erzeugt werden soll. Der Blende 161 ist wiederum ein Mikrolinsenarray 163 nachgeordnet, welches aus einer Vielzahl von matrixartig angeordneten Mikrolinsen 164 besteht. Die durch die Öffnung 162 fallenden Lichtstrahlen der Lichtquelle fallen nun auf jede der Mikrolinsen 164, so dass durch jede der Mikrolinsen 164 die gleiche Abbildung 165 erzeugt wird. Auf Grund der so vorliegenden, optischen Redundanz ist ein solches Projektionsmodul 16 gegen Verschmutzungen sehr robust und eignet sich im rauen Alltagsbetrieb eines Kraftfahrzeugs.

Wie ferner ersichtlich wird, ist durch die Gesamtheit der Projektionsmodule 16 ein aus den Lichtsegmenten 17 bestehender "Schutzring" um das Kraftfahrzeug K1 herum erzeugbar.

Die Projektionsmodule 16 werden situationsbedingt in der Regel jedoch nur zu einem Teil aktiviert.

Wie ferner erkennbar ist, weist das Kraftfahrzeug K1 mehrere Laserscanner 18 auf (vergleiche hierzu auch Fig. 3). Jeder Laserscanner 18 dient zur Erzeugung von Konturen 27 beziehungsweise Konturgebilden. Jede Kontur 27 umgrenzt eine bestimmte Fläche, welche beliebige Formen annehmen kann.

Jeder Laserscanner 18 ist dabei vorzugsweise als sogenannter Galvoscanner ausgebildet. Dieser ist zur Erzeugung beliebiger Vektorgraphiken geeignet. Konkret wird durch eine Lasereinheit 180 ein Laserstrahl L erzeugt und auf einen bewegbaren Mikrospiegel 181 gelenkt. Der Mikrospiegel 181 wird von einer nicht näher dargestellten piezoelektrischen oder elektrodynamischen Antriebseinheit im Mikrosekundenbereich über zwei Achsen bewegt und lenkt den Laserstrahl L zu einem Laserstrahl L' ab, wodurch jede beliebige Kontur erzeugt werden kann.

Bei dem Kraftfahrzeug K1 sind mehrere der Laserscanner 18 so platziert, dass Konturen 27 über einen Winkel α von 360 Grad um das Kraftfahrzeug K1 herum erzeugt werden können (vergleiche angedeutetes Koordinatensystem mit Fahrzeugquerachse Y und Fahrzeuglängsachse X).

Durch die hohe Geschwindigkeit des die jeweilige Kontur 27 abfahrenden Laserstrahls L ist eine Bewegung für das menschliche Auge nicht mehr erkennbar, so dass die Kontur 27 für einen Betrachter stillzustehen scheint.

Ferner weist das Kraftfahrzeug K1 zumindest im Bereich seines Frontends gleichmäßig über seine Breite verteilte Richtlautsprecher 19 auf. Die Richtlautsprecher 19 sind in der Lage, ihren Schall mit einem äußerst eng gebündelten Schallkegel auszusenden. So können andere Verkehrsteilnehmer gezielt und präzise durch den Schall "adressiert" werden.

Zusätzlich können die Fensterscheiben des Kraftfahrzeugs K1, also eine Windschutzscheibe 20, eine Heckscheibe 21 sowie Seitenscheiben 22 jeweils mit wenigstens einem transparenten Display 23 ausgestattet sein. Das Display 23 kann beispielsweise als LCD-Display ausgestaltet sein. Durch die Transparenz eines solchen Displays 23 ist es möglich, Darstellungen auf den Fensterscheiben des Kraftfahrzeugs K1 zu erzeugen, ohne die Sicht für die Fahrzeuginsassen nach außen zu behindern. Dies ist vor allem beim teilautomatisierten Fahrbetrieb von Wichtigkeit. Allerdings ist es auch denkbar, die Displays 23 nicht transparent auszubilden. In einem solchen Fall kann das Display 23 allerdings nur eine geringe Flächenausdehnung aufweisen, um eine Sicht von Fahrzeuginsassen nicht zu beeinträchtigen.

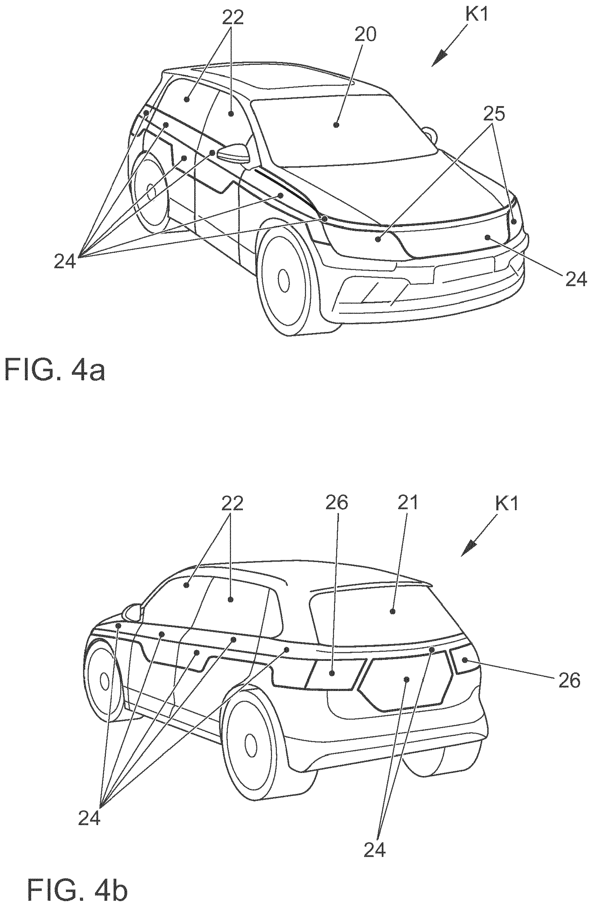

Schließlich ist am Kraftfahrzeug K1 auch eine in Längsrichtung des Kraftfahrzeugs K1 umlaufende oder nahezu umlaufende Anzeigeeinrichtung 24 vorhanden (vergleiche Figuren 4a und 4b).

Die Anzeigeeinrichtung 24 läuft in Längsrichtung des Kraftfahrzeugs K1 vorzugsweise vollständig oder zumindest nahezu vollständig um das Kraftfahrzeug K1 herum. Die Anzeigeeinrichtung 24 kann vorzugsweise als Matrix-LED-Anzeigeeinrichtung ausgebildet sein, welche eine Vielzahl von matrixartig angeordneten LEDs (Leuchtdioden) aufweist. Die Leuchtdioden sind vorzugsweise als RGB-Leuchtdioden ausgebildet, so dass mit der Anzeigeeinrichtung 24 nicht nur beliebige Darstellungen, sondern auch beliebige Farben erzeugt werden können. Wie ersichtlich wird, erstreckt sich die Anzeigeeinrichtung 24, ausgehend von den unteren Scheibenwurzeln der Seitenscheiben 22 beziehungsweise der Heckscheibe 21 nach unten. Dabei kann die Breite der Anzeigeeinrichtung 24, senkrecht zu der Längserstreckung gesehen, an ausgewählten Stellen deutlich größer sein.

Im Ausführungsbeispiel ist die Breite im Bereich um einen vorderen Türspalt und auch im Bereich der Heckklappe deutlich größer gewählt. Ferner wird die Breite im Bereich neben und zwischen Scheinwerfern 25 sowie im Bereich neben und zwischen Heckleuchten 26 deutlich größer gewählt.

Zurückkommend auf Fig. 1 ist ebenfalls ersichtlich, dass die Auswerte- und Steuereinrichtung 10 über einen Datenbus C signaltechnisch auch mit den Projektionsmodulen 16, den Laserscannern 18, den Lichtlautsprechern 19, den transparenten Displays 23 und der umlaufenden Anzeigeeinrichtung 24 in Verbindung steht.

Auf diese Weise können diese Komponenten in Abhängigkeit von Signalen der Objekt- und Umfelderfassungseinrichtung 11, der Radsensoren 12, der Abstandssensoren 13, des Fahrtrichtungshebels 14 sowie des Lenkwinkelsensors 15 angesteuert werden.

Die signaltechnische Verknüpfung ist lediglich beispielhaft und soll nicht als abschließend verstanden werden. Beispielsweise ist es denkbar, die Auswerte- und Steuereinrichtung 10 signaltechnisch auch mit einem Gaspedalsensor oder mit einem Fahrstufenwahlsensor zu verbinden.

Wird nun beispielsweise von einem Fahrzeugführer der Fahrtrichtungshebel 14 betätigt, so können über die Auswerte- und Steuereinrichtung 10 zusätzlich ausgewählte oder alle der Komponenten 16 bis 24 angesteuert und damit bedarfsweise eine Kommunikation nach außen für andere Verkehrsteilnehmer erzeugt werden. Das gleiche gilt für eine sich verändernde Geschwindigkeit des Kraftfahrzeugs K1 bis hin zu einem Stillstand, welcher über die Radsensoren 12 erfasst werden kann. Über einen Lenkwinkelsensor 15 und/oder die Betätigung des Fahrtrichtungshebels 14 kann eine Abbiegeansicht oder auch eine Fahrstreifenwechselabsicht des Kraftfahrzeugs K1 erfasst und über die genannten Komponenten nach außen kommuniziert werden. Schließlich können über die Objekt- und Umfelderfassungseinrichtung 11 und/oder über die Abstandssensoren 13 andere Verkehrsteilnehmer beziehungsweise deren Relativgeschwindigkeit zum Kraftfahrzeug K1 erfasst und hieraus wiederum eine notwendige Kommunikation mittels der besagten Komponenten abgeleitet werden.

Wie dies im Einzelnen erfolgen kann, wird nachfolgend näher beschrieben.

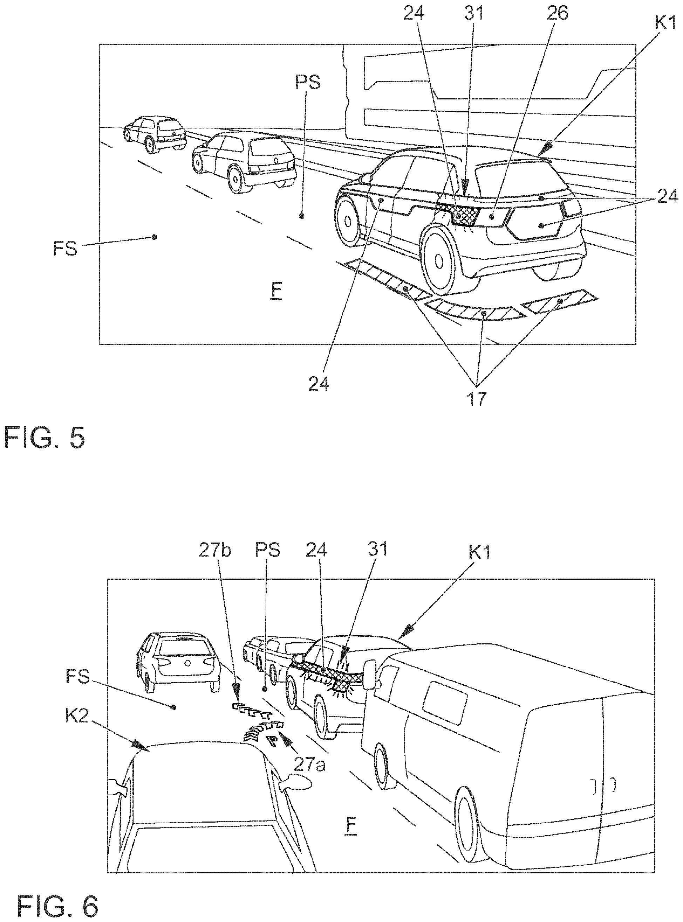

So zeigt die Fig. 5 eine erste Situation für ein beabsichtigtes Ausparken des Kraftfahrzeug K1. Das Kraftfahrzeug K1 befindet sich auf einem Parkstreifen PS einer Straße und möchte auf einen Fahrstreifen FS der Straße ausparken. Zu diesem Zweck werden vom Kraftfahrzeug K1 in bereits beschriebener Weise im hinteren, linken Eckbereich des Kraftfahrzeugs K1 auf einer befahrbaren Fläche F der Straße drei Lichtsegmente 17 projiziert. Die Lichtsegmente 17 weisen nachfolgende Verkehrsteilnehmer auf den Ausparkwunsch des Kraftfahrzeugs K1 deutlich hin, auch wenn das Kraftfahrzeug K1 von einem anderen Kraftfahrzeug verdeckt sein sollte.

Zusätzlich wird die umlaufende Anzeigeeinrichtung 24 derart aktiviert, dass diese im Eckbereich, und zwar neben der dem Fahrstreifen FS zugewandten Heckleuchte 26 ein Aufleuchten 31 durchführt. Sowohl die Lichtsegmente 17, als auch das Aufleuchten 31 kann dynamisch bewegt werden.

Insbesondere wird durch jeden der Projektionsmodule 16 genau ein Lichtsegment 17 erzeugt (vergleiche auch Fig. 1). So kann durch sequentielles An- und Ausschalten der Projektionsmodule 16 oder auch durch eine zeitlich veränderte Farbgebung eine Dynamisierung der Darstellung erzielt werden. Das gleiche gilt übrigens auch für das Aufleuchten 31, welches mit einer Vielzahl von Leuchtdioden der Anzeigeeinrichtung 24 im besagten Bereich erfolgt.

In Fig. 6 ist eine Ausparksituation des Kraftfahrzeugs K1 dargestellt, bei der sich bereits als Verkehrsteilnehmer ein zweites Kraftfahrzeug K2 annähert.

Zur Kommunikation an andere Verkehrsteilnehmer wurde zunächst die Anzeigeeinrichtung 24 im hinteren Eckbereich sowie auf der dem Fahrstreifen FS zugewandten Seite derart angesteuert, dass ein Aufleuchten 31 stattfindet. Dieses kann zusätzlich, wie bereits beschrieben, dynamisiert werden.

Des Weiteren wurde zur Kommunizierung der Ausparkabsicht von den Laserscannern 18 eine Kontur 27b in Form einer Pfeilkette oder Pfeilreihe erzeugt, die vom Kraftfahrzeug K1 auf den Fahrstreifen FS weist.

Ferner wurde durch nicht näher dargestellte Abstandssensoren des Kraftfahrzeugs K1 festgestellt, dass sich die Relativgeschwindigkeit zwischen dem Kraftfahrzeug K2 und dem Kraftfahrzeug K1 verringert und unter einen bestimmten Grenzwert fällt.

Dies führt dazu, dass vom Kraftfahrzeug K1 zusätzlich durch die Laserscanner 18 (vergleiche Fig. 1) auf der befahrbaren Fläche F des Fahrstreifens FS eine Kontur 27a erzeugt wird. Die Kontur 27a besteht ebenfalls aus einer Kette von mehreren Pfeilsymbolen, welche vom Fahrstreifen FS auf die freiwerdende Parklücke des Kraftfahrzeugs K1 weisen, verbunden mit dem Buchstaben P. Auf diese Weise wird das Kraftfahrzeug K2 nicht nur darauf hingewiesen, dass das Kraftfahrzeug K1 ausparken möchte, sondern gleichzeitig auch dazu eingeladen, in die frei werdende Parklücke einzufahren.

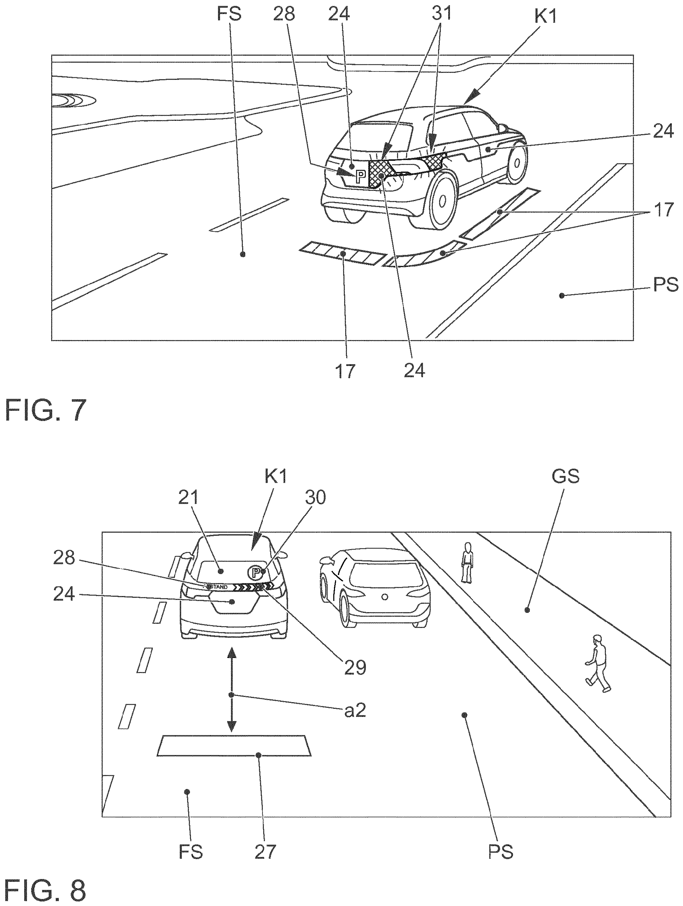

Der Fig. 7 ist eine Verkehrssituation zu entnehmen, in der das Kraftfahrzeug K1 von einem Fahrstreifen FS rückwärts in einen Parkstreifen PS einparken will. Hierzu werden wiederum vom Kraftfahrzeug K1 um den hinteren, dem Parkstreifen PS beziehungsweise einer Parklücke zugewandten Eckbereich des Kraftfahrzeugs K1 auf dem Fahrstreifen FS drei Segmente 17 erzeugt. Diese können in beschriebener Weise dynamisiert werden.

Abgesehen vom Ausführungsbeispiel ist hier wie auch bei allen anderen Beispielen natürlich denkbar, dass die Anzahl und/oder die Form der Lichtsegmente 17 anders gewählt wird.

Zusätzlich zu den Lichtsegmenten 17 wird die umlaufende Anzeigeeinrichtung 24 derart angesteuert, dass im rechten hinteren Eckbereich der Anzeigeeinrichtung 24, welcher dem Parkstreifen PS zugewandt ist, ein Aufleuchten 31 stattfindet. Zusätzlich wird im Heckbereich ein alphanumerischer Hinweis 28 in Form des Buchstabens P ausgegeben.

Der Fig. 8 ist ein weiteres Beispiel einer Einparksituation zu entnehmen. Hierbei beabsichtigt das Kraftfahrzeug K1 wiederum ein rückwärtiges Einparken von einem Fahrstreifen FS auf die befahrbare Fläche eines Parkstreifens PS. Mit GS ist ein Gehstreifen beziffert.

In diesem Ausführungsbeispiel werden die Laserscanner 18, und zwar ein Laserscanner 18 im Heckbereich des Kraftfahrzeugs K1 derart angesteuert, dass auf dem Fahrstreifen FS eine Kontur 27 in Form eines Balkens entsteht.

Insbesondere erfolgt die Erzeugung der Kontur 27 in einem Abstand a2 vom Heck des Kraftfahrzeugs K1. Der Abstand a2 ist derart bemessen, dass das Kraftfahrzeug K1 für das Einparken ausreichend Manövrierplatz hat, selbst wenn sich ein anderer Verkehrsteilnehmer unmittelbar vor der Kontur 27 befindet. Durch die Kontur 27 wird ein sich von hinten nähernder Verkehrsteilnehmer quasi dazu aufgefordert, vor der Kontur 27 zu halten.

Ergänzend oder alternativ kann die umlaufende Anzeigeeinrichtung 24 am Heck des Kraftfahrzeugs K1 derart angesteuert werden, dass ein graphischer Richtungshinweis 29 (hier infolge einer Pfeilkette) und/oder ein alphanumerischer Hinweis erfolgt. Der alphanumerische Hinweis 28 kann beispielsweise als die Zeichenkette "Abstand!" ausgegeben werden.

Es ist auch denkbar, dass zusätzlich auf der Heckscheibe 21 noch ein alphanumerischer Hinweis 30 erfolgt. Der alphanumerische Hinweis 30 wird im Ausführungsbeispiel als von einem Kreis umgebener Buchstabe P dargestellt. Die zusätzliche Darstellung auf der Heckscheibe 21 beziehungsweise mittels des transparenten Displays 23 (vergleiche Fig. 1) erleichtert das Erkennen der Situation auch für Verkehrsteilnehmer, welche nicht unmittelbar hinter dem Kraftfahrzeug K1 zum Stehen kommen, sondern beispielsweise darauf angewiesen sind, durch die Scheiben zusätzliche Informationen über die Situation vor ihnen zu erlangen.

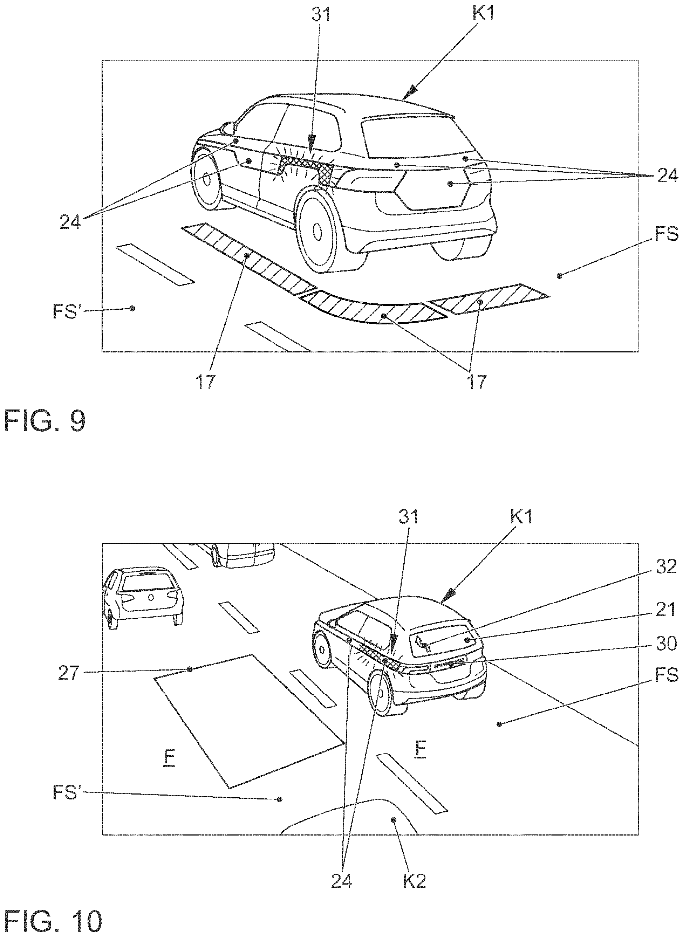

Anhand der Fig. 9 ist nun eine ebenfalls typische Fahrsituation dargestellt, bei der das Kraftfahrzeug K1 während der Fahrt von einem Fahrstreifen FS in einen anderen Fahrstreifen FS' wechseln möchte.

Zur Kommunikation dieses Vorhabens wird wiederum auf dem Fahrstreifen FS neben dem Kraftfahrzeug K1 ein aus drei Lichtsegmenten 17 bestehendes Lichterscheinungsbild erzeugt.

Die Lichtsegmente 17 verlaufen auf der dem Fahrstreifen FS' zugewandten Seite von der Front des Kraftfahrzeugs K1 bis nach hinten zur rechten Seite des Hecks vom Kraftfahrzeug K1.

Hierdurch wird ein anderer Verkehrsteilnehmer quasi darauf hingewiesen, dass sich die Position des Kraftfahrzeugs K1 in naher Zukunft in Richtung des Fahrstreifens FS' bewegt.

Zusätzlich oder alternativ kann die umlaufende Anzeigeeinrichtung 24 so angesteuert werden, dass im hinteren Heckbereich auf der dem Fahrstreifen FS' zugewandten Seite ein Aufleuchten 31 stattfindet.

Wie Fig. 10 verdeutlicht, ist es auch denkbar, dass eine Fahrstreifenwechselabsicht des Kraftfahrzeugs K1 derart kommuniziert wird, dass vom Kraftfahrzeug K1 beziehungsweise durch ausgewählte Laserscanner 18 auf dem Fahrstreifen FS' eine Kontur 27 erzeugt wird. Die Kontur 27 wird auf dem Fahrstreifen FS' neben dem Kraftfahrzeug K1 erzeugt und entspricht in ihrer Größe in etwa dem Umriss des Kraftfahrzeugs K1. Die Kontur 27 kann vorzugsweise einen rechteckartigen Umriss aufweisen.

Hierdurch wird einem nachfolgenden, auf dem Fahrstreifen FS' befindlichen Kraftfahrzeug K2 signalisiert, dass der Bereich der Kontur 27 für das Kraftfahrzeug K1 "reserviert" ist und in naher Zukunft ein Fahrstreifenwechsel des Kraftfahrzeugs K1 dorthin zu erwarten ist.

Zusätzlich oder auch alternativ ist wiederum denkbar, dass ein Aufleuchten 31 im hinteren Bereich der Anzeigeeinrichtung 24 stattfindet, welche dem Fahrstreifen FS' zugewandt ist. Das Aufleuchten 31 kann mit einem alphanumerischen Hinweis verbunden sein, welcher auf der Anzeigeeinrichtung 24 im Heckbereich des Kraftfahrzeugs K1 erzeugt wird. Der alphanumerische Hinweis 30 kann beispielsweise "Fahrstreifenwechsel!" oder auch "Spurwechsel!" lauten.

Ergänzend kann auf der Heckscheibe 21 ein graphischer Richtungshinweis 32, beispielsweise in Form eines versetzten Pfeils ausgegeben werden.

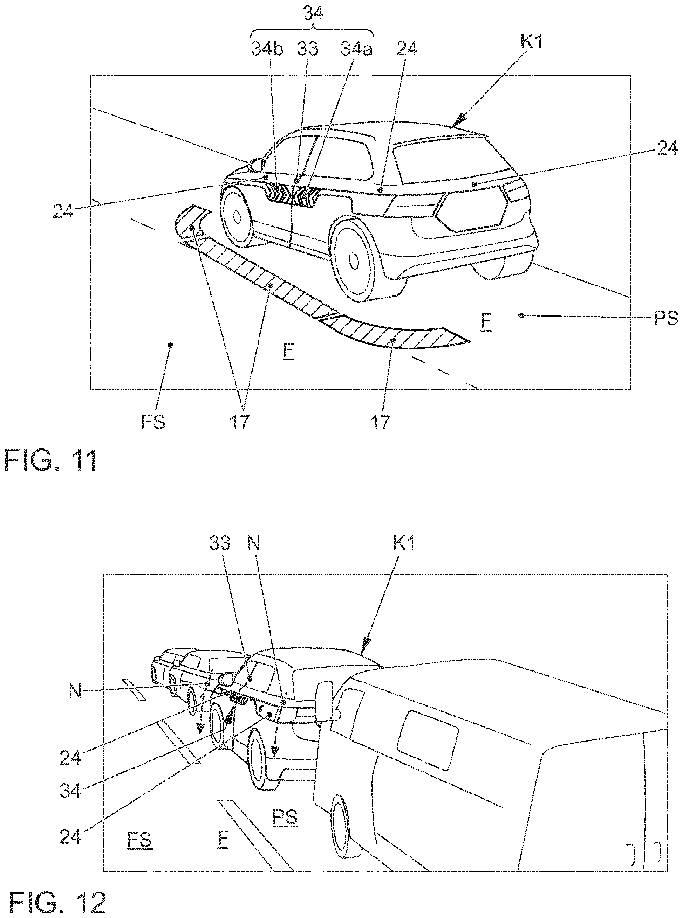

Das unvorsichtige Öffnen einer Tür führt im Straßenverkehr immer wieder zu Unfällen. Um eine beabsichtigte beziehungsweise bevorstehende Türöffnung nach außen zu kommunizieren wird deshalb gemäß Fig. 11 vorgeschlagen, dass neben dem parkenden Kraftfahrzeug K1 wiederum auf der befahrbaren Fläche F des Parkstreifens PS und/oder des Fahrstreifens FS drei Lichtsegmente 17 erzeugt werden. Die Lichtsegmente 17 reichen vom vorderen Eckbereich des Kraftfahrzeugs K1 bis zum hinteren Eckbereich des Kraftfahrzeugs K1 und werden auf der Seite der bevorstehenden Türöffnung erzeugt. Auf diese Weise können bei einer bevorstehenden Türöffnung herannahende Verkehrsteilnehmer rechtzeitig auf diese Situation vorbereitet und gewarnt werden. Außerdem wird durch die Lichtsegmente 17 eine Sicherheitszone um den Ausstiegsbereich herum definiert.

Zusätzlich oder alternativ ist es höchst zweckmäßig, wenn im Bereich eines die Türöffnung direkt betreffenden Türspaltes 33 auf der Anzeigeeinrichtung 24 ein graphischer Türöffnungshinweis 34 erzeugt wird. Der Türöffnungshinweis 34 kann beispielsweise dadurch realisiert werden, indem pfeilartige Symbole 34a beziehungsweise eine Pfeilkette in Fahrtrichtung und auf den Türspalt 33 weisen. Pfeilartige Symbole 34b auf der anderen Seite des Türspaltes 33 weisen entgegen der Fahrtrichtung und wiederum auf den Türspalt 33 zu.

Zusätzlich können die pfeilartigen Symbole 34a und 34b bewegt werden. Dies kann beispielsweise in der Form erfolgen, dass sich die Pfeile 34a und 34b auf den Türspalt 33 zubewegen.

In der Fig. 12 ist eine andere Möglichkeit dafür dargestellt, wie ergänzend oder alternativ zur Verfahrensweise der Fig. 11 eine bevorstehende Türöffnung für Verkehrsteilnehmer signalisiert werden kann. Konkret weist hier das Kraftfahrzeug K1 zusätzlich eine Verstelleinrichtung im Fahrwerk auf (nicht dargestellt). Mittels dieser Verstelleinrichtung kann das Kraftfahrzeug K1 bei einer bevorstehenden Türöffnung zur Seite der bevorstehenden Türöffnung hingeneigt werden (vergleiche Neigungsbewegung N).

Im Zuge der immer weiter fortschreitenden Automatisierung von Kraftfahrzeugen fällt zunehmend die bislang gewohnte, direkte Kommunikation zwischen einem Fahrer eines Kraftfahrzeugs beziehungsweise den Fahrzeuginsassen und einem andere menschlichen Verkehrsteilnehmer beziehungsweise Fußgänger über Gestik und Mimik weg.

Eine solche Gestik und Mimik ist jedoch sehr wichtig, da die Menschen bei unklaren Situationen daran gewöhnt sind, zunächst Rat bei den im Innenraum eines anderen Kraftfahrzeugs erkennbaren Fahrzeuginsassen, vorwiegend beim Fahrzeugführer zu suchen.

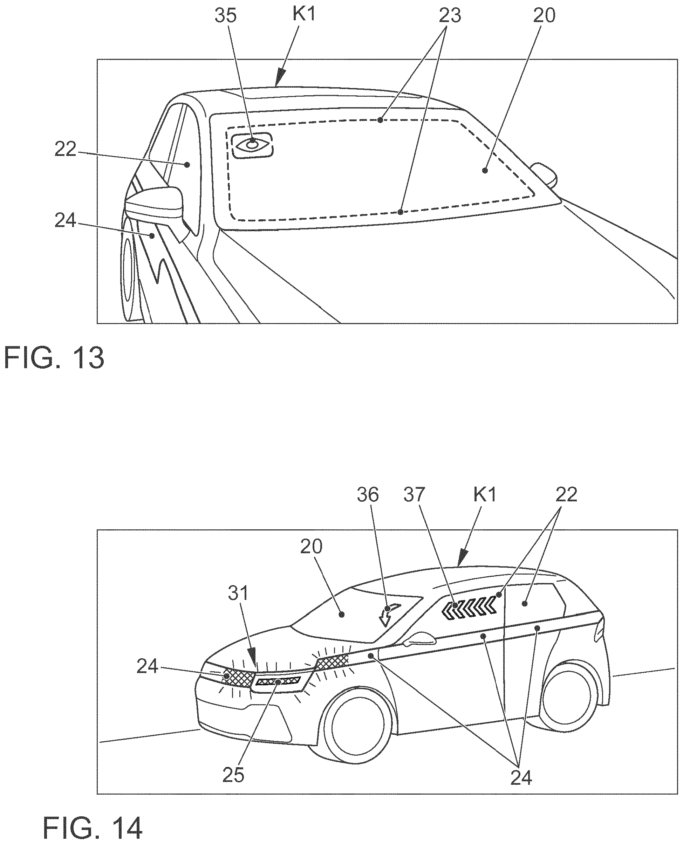

Daher schlägt die Erfindung gemäß Fig. 13 auch vor, in bestimmten Situationen auf der Windschutzscheibe 20 beziehungsweise durch das transparente Display 23 ein Quittierungssymbol 35 zu erzeugen.

Das Quittierungssymbol 35 kann beispielsweise ein menschliches Auge symbolisieren beziehungsweise eine solche Darstellung zumindest als Bestandteil aufweisen. Hierdurch soll einem anderen Verkehrsteilnehmer wie beispielsweise einem Fußgänger oder einem Fahrradfahrer signalisiert werden: "Ich habe dich erkannt!".

Eine häufig auftretende Verkehrssituation ist anhand von Fig. 14 dargestellt, in der das Kraftfahrzeug K1 eine Abbiegeintension beispielsweise nach links aufweist. Um dies zu kommunizieren, wird die umlaufende Anzeigeeinrichtung 24 im Bereich des vorderen, linken Scheinwerfers 25 derart angesteuert, dass ein Aufleuchten 31 stattfindet. Die durch die Anzeigeeinrichtung 24 verfügbare Fläche ist um ein Wesentliches größer als die mit herkömmlichen Fahrtrichtungsanzeigern erreichbare Fläche. Somit ist eine noch deutlichere Signalwirkung, insbesondere bei heller Umgebung erzeugbar.

Ergänzend oder alternativ wird in der Windschutzscheibe 20 ein pfeilartiges Abbiegesymbol 36 erzeugt. Durch eine Anzeige in der erhöhten Position der Windschutzscheibe 20 können diese Informationen auf Grund der besseren Erkennbarkeit im Rückspiegel an weitere, vorausfahrende Fahrzeuge übermittelt werden. So kann beispielsweise der Vordermann frühzeitig die Abbiegeintension des Kraftfahrzeugs K1 erkennen und bei einer mehrspurigen Straße dieses durch entsprechendes "Vorrücken" ermöglichen.

Um außenstehenden Verkehrsteilnehmern, beispielsweise Fußgängern, welche sich seitlich vom Kraftfahrzeug K1 in Abbiegerichtung befinden, eine zusätzliche Information zu geben, wird vorgeschlagen, in den dem Verkehrsteilnehmer zugewandten Seitenscheiben 22 ein weiteres Symbol 37 zu erzeugen. Das Symbol 37 kann beispielsweise pfeilartig, bevorzugt in einer Art einer Pfeilkette ausgebildet sein. Es weist so einen Fußgänger darauf hin, dass sich das Kraftfahrzeug K1 noch in Bewegung befindet aber auf die angedeutete Abbiegung (vergleiche 36) "hinsteuert".

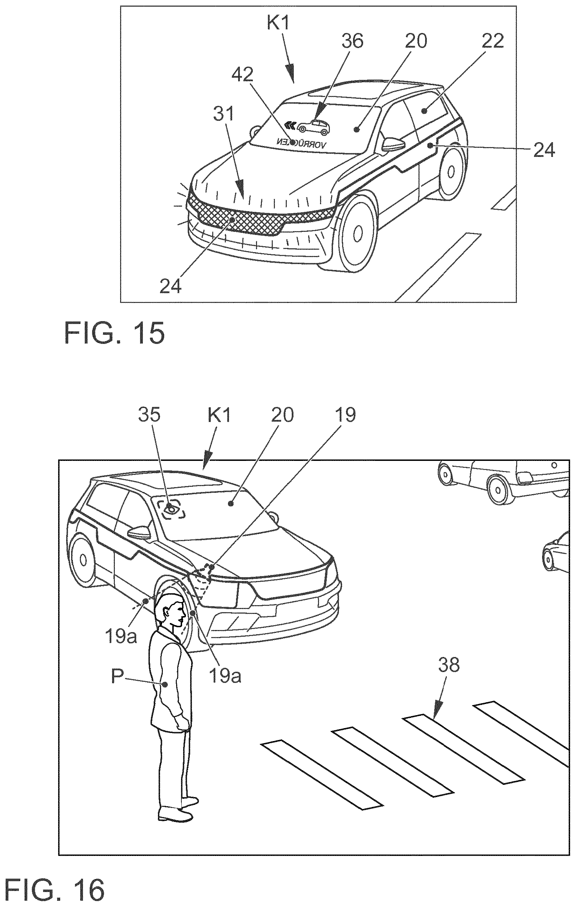

Die Fig. 15 zeigt eine weitere Möglichkeit, eine Abbiegeintension des Kraftfahrzeugs K1 zu kommunizieren. Konkret wird dazu zunächst auf der Windschutzscheibe 20 ein Abbiegesymbol 36 in Form eines Kraftfahrzeugs und in Form von in die Abbiegerichtung weisenden Pfeilen erzeugt. Unterhalb des Abbiegesymbols 36 erfolgt die Darstellung eines Aufforderungssymbols 42. Das Aufforderungssymbol 42 wird im Ausführungsbeispiel durch den Schriftzug "Vorrücken" gebildet und ist in Spiegelschrift ausgeführt. Auf diese Weise und durch die erhöhte Position in der Windschutzscheibe 20 sind diese Informationen für die vor dem Kraftfahrzeug K1 befindlichen Verkehrsteilnehmer sehr gut ersichtlich. Zusätzlich kann die Anzeigeeinrichtung 24 derart angesteuert werden, dass auf der vorderen Seite, sich vorzugsweise über die gesamte Breite des Kraftfahrzeugs K1 erstreckend, ein Aufleuchten 31 generiert wird. Das Aufleuchten 31 wie auch die Symbole 36 und 42 können dynamisiert werden, beispielsweise durch schnelles Ein- und Ausblenden.

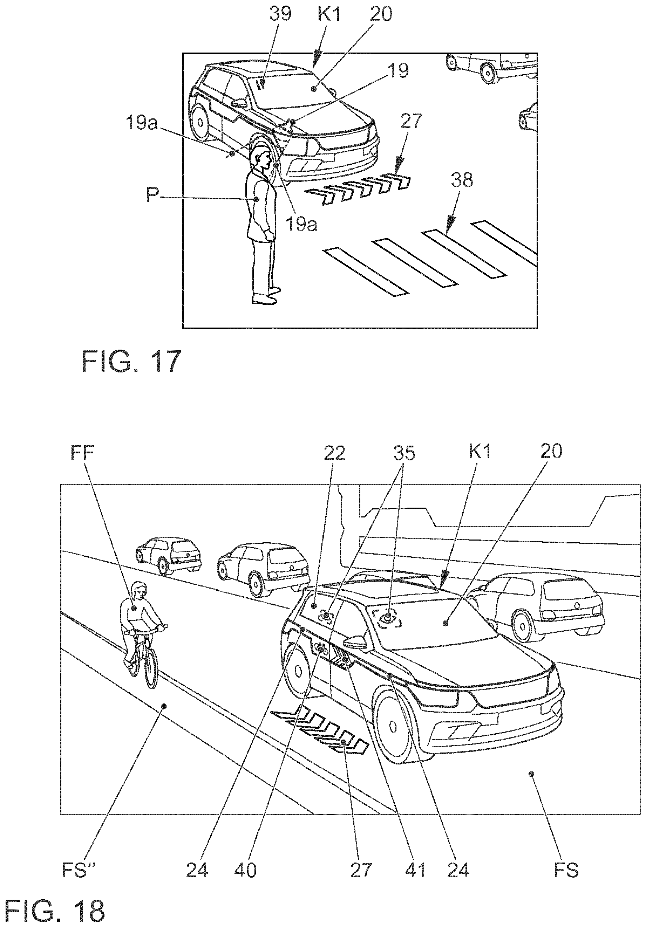

In den Fig. 16 und 17 ist eine typische Situation an einem Zebrastreifen 38 dargestellt. Konkret möchte eine Person P eine Straße am Zebrastreifen 38 überqueren.

Das sich herannahende Kraftfahrzeug K1 erzeugt daraufhin auf der Windschutzscheibe 20 das bereits beschriebene Quittierungssymbol 35 in Form eines Auges. Hierdurch quittiert es der Person P, dass diese vom Kraftfahrzeug K1 wahrgenommen wird und signalisiert "Ich habe Dich gesehen!". Zusätzlich kann einer der Richtlautsprecher 19 (vergleiche Fig. 1) derart angesteuert werden, dass der Person P auch akustisch mitgeteilt wird, dass diese wahrgenommen wurde.

Dabei kann durch den Richtlautsprecher 19 das akustische Signal in einem Schallkegel 19a ausgegeben werden, welcher stark fokussiert und genau auf die Person P ausgerichtet ist.

Sobald das Kraftfahrzeug K1 am Zebrastreifen 38 angehalten hat (Fig.17), kann es durch ein Haltesymbol 39 der Windschutzscheibe 20 seine Warteabsicht signalisieren. Zusätzlich wird über einen geeignet positionierten Laserscanner 18 (vergleiche Fig. 1) wiederum eine Kontur 27 beziehungsweise ein Konturgebilde erzeugt, welches im Ausführungsbeispiel in der Form einer in Richtung der Straßenüberquerung weisenden Pfeilkette ausgebildet ist.

Die Kontur 27 stellt für die Person P daher ein zusätzliches Aufforderungssignal dar, die Straße auf dem Zebrastreifen 38 nun gefahrlos zu überqueren und signalisiert "Geh bitte über die Straße!". Zusätzlich ist wiederum denkbar, dass die Aufforderung zum Überqueren der Straße auch akustisch über den Richtlautsprecher 19 ausgegeben wird.

Diese Verfahrensweise ist auch in anderen Situationen denkbar, bei denen eine Person vor dem Kraftfahrzeug K1 eine Straße überqueren möchte.

Schließlich soll anhand der Fig. 18 eine häufig auftretende Situation erläutert werden, wie sie zwischen dem Kraftfahrzeug K1 und schwächeren Verkehrsteilnehmern, wie beispielsweise einem Fahrradfahrer FF oder einem Fußgänger auftreten kann. So fährt der Fahrradfahrer FF neben dem Kraftfahrzeug K1 auf einem Fahrstreifen FS" (Fahrradweg) in die gleiche Fahrtrichtung wie das Kraftfahrzeug K1. Das Kraftfahrzeug K1 signalisiert zunächst durch ein Quittierungssymbol 35 in der Seitenscheibe 22, dass es den Fahrradfahrer FF bemerkt hat. Durch die Objekt- und Umfelderfassungseinrichtung 11 (vergleiche Fig. 1) kann das Kraftfahrzeug K1 zudem erfassen, dass es sich bei dem Verkehrsteilnehmer um einen Fahrradfahrer FF handelt. Daher kann zusätzlich auf der dem Fahrradfahrer FF zugewandten Anzeigeeinrichtung 24 ein Symbol 40 erzeugt werden, welche die Art des vom Kraftfahrzeug K1 erkannten Verkehrsteilnehmers, also ein Fahrrad darstellt.

Im Falle eines neben dem Kraftfahrzeug K1 laufenden Fußgängers ist es dann denkbar, dass als Symbol 40 ein Fußgänger dargestellt wird. Durch das zusätzliche Symbol 40 wird die Kommunikationssicherheit zwischen dem Kraftfahrzeug K1 und dem anderen Verkehrsteilnehmer, in diesem Fall dem Fahrradfahrer FF noch weiter erhöht.

Wie weiter erkennbar ist, wird zusätzlich auf der Anzeigeeinrichtung 24 ein Richtungssymbol 41 erzeugt. Das Richtungssymbol 41 besteht aus in Fahrtrichtung weisenden Pfeilen. Diese können sich zusätzlich in Fahrtrichtung fortbewegen. Durch das Richtungssymbol 41 soll der Fahrradfahrer FF zusätzlich dazu animiert werden, an dem Kraftfahrzeug K1 vorbeizufahren, da das Kraftfahrzeug K1 den Fahrradfahrer FF bemerkt hat.

Den gleichen Zweck verfolgt ein pfeilartige Kontur 27, welche ergänzend auf dem Fahrstreifen FS erzeugt werden kann.

Sobald sich der Fahrradfahrer FF nun soweit fortbewegt hat, dass er ein Blick auf die Windschutzscheibe 20 werfen kann, so kann er auch das Quittierungssymbol 35 auf dem ihm zugewandten Teil der Windschutzscheibe 20 wahrnehmen.

### Bezugszeichenliste

- 10: Auswerte- und Steuereinrichtung
- 11: Objekt- und Umfelderfassungseinrichtung
- 12: Radsensoren
- 13: Abstandssensoren
- 14: Fahrtrichtungshebel
- 15: Lenkwinkelsensor
- 16: Projektionsmodule
- 17: Lichtsegmente
- 18: Laserscanner
- 19: Richtlautsprecher
- 19a: Schallkegel
- 20: Windschutzscheibe
- 21: Heckscheibe
- 22: Seitenscheiben
- 23: transparente Displays
- 24: umlaufende Anzeige- und/oder Lichterzeugungseinrichtung
- 25: Scheinwerfer
- 26: Heckleuchten
- 27, 27a, 27b: Konturen
- 28: alphanumerischer Hinweis
- 29: graphischer Richtungshinweis
- 30: alphanumerischer Hinweis
- 31: Aufleuchten
- 32: graphischer Richtungshinweis
- 33: Türspalt
- 34: graphischer Türöffnungshinweis
- 34a: pfeilartige Symbole
- 34b: pfeilartige Symbole
- 35: Quittierungssymbol
- 36: Abbiegesymbol
- 37: pfeilartiges Symbol
- 38: Zebrastreifen
- 39: Haltesymbol
- 40: Symbol
- 41: Richtungssymbol
- 42: Aufforderungssymbol
- 160: Lichtquelle
- 161: Blende
- 162: Öffnung
- 163: Mikrolinsenarray
- 164: Mikrolinsen
- 165: Abbildung
- 180: Lasereinheit
- 181: bewegbarer Mikrospiegel

- α: Winkel
- a1, a2: Abstand
- C: Datenbus (CAN)
- E: Steuerungselektronik
- F: befahrbare Fläche
- FF: Verkehrsteilnehmer, Fahrradfahrer
- FS, FS', FS": Fahrstreifen
- GS: Gehstreifen
- K1: Kraftfahrzeug
- K2: Verkehrsteilnehmer; zweites Kraftfahrzeug
- L, L': Laserstrahl
- K1-K6: Konturen
- N: Neigungsbewegung
- P: Verkehrsteilnehmer, Person
- PS: Parkstreifen
- U1-U4: Umkehrpunkte
- X: Fahrzeuglängsachse
- Y: Fahrzeugquerachse

## Patentansprüche

1. Verfahren zur Kommunikation eines Kraftfahrzeugs (K1) mit einem Verkehrsteilnehmer (K2, P, FF), derart, dass der Verkehrsteilnehmer (K2, P, FF) über ein geplantes Manöver des Kraftfahrzeugs (K1) informiert wird, wobei auf einer befahrbaren Fläche (F) und/oder auf dem Kraftfahrzeug (K1) selbst wenigstens eine optisch sichtbare Erscheinung erzeugt wird, wobei die optisch sichtbare Erscheinung durch das Kraftfahrzeug (K1) bei einem beabsichtigten Wechsel des Kraftfahrzeugs (K1) in einen bestimmten Fahrstreifen (PS, FS oder FS') einer befahrbaren Fläche (F) oder bei einem beabsichtigten Wechsel von einem Fahrstreifen (FS) einer befahrbaren Fläche (F) in einen Parkstreifen (PS) derart erfolgt, dass auf der befahrbaren Fläche (F) ein aus wenigstens einem vollflächig ausgeleuchteten Lichtsegment (17) oder aus wenigstens einer eine Fläche umgrenzenden Kontur (27, 27a, 27b) bestehendes Lichterscheinungsbild erzeugt wird und/oder die optisch sichtbare Erscheinung auf wenigstens einer längs um das Kraftfahrzeug (K1) umlaufenden oder nahezu umlaufenden Anzeige- oder Lichterzeugungseinrichtung (24) gebildet wird, **dadurch gekennzeichnet, dass**
• bei einem beabsichtigten, rückwärtigen Einparken des Kraftfahrzeugs (K1) in einen Parkstreifen (PS) auf der dem Parkstreifen (PS) zugewandten Seite des Kraftfahrzeugs (K1) mehrere vollflächig ausgeleuchtete Lichtsegmente (17) auf der befahrbaren Fläche (F) erzeugt werden und auf der umlaufenden Anzeigeeinrichtung (24) zumindest heckseitig wenigstens eine auf das beabsichtigte Einparken hinweisende, optisch sichtbare Erscheinung erzeugt wird, wobei durch die Anzeigeeinrichtung (24) eine Anzeigefläche ausgebildet wird und die optisch sichtbare Erscheinung auf der Anzeigefläche durch einen alphanumerischen Hinweis (28) gebildet wird, verbunden mit einem Aufleuchten (31) eines dem Parkstreifen (PS) zugewandten Teils der Anzeigefläche oder
• bei einem beabsichtigten, rückwärtigen Einparken des Kraftfahrzeugs (K1) in einen Parkstreifen (PS) in einem Abstand (a2) hinter dem Kraftfahrzeug (K1) eine eine Fläche umgrenzende Kontur (27) erzeugt wird, wobei der Abstand (a2) derart bemessen ist, dass im Fall eines vor der Kontur (27) haltenden Verkehrsteilnehmers dem Kraftfahrzeug (K1) ausreichend Manövrierplatz zum Einparken verbleibt und auf der umlaufenden Anzeigeeinrichtung (24) zumindest heckseitig wenigstens eine auf das beabsichtigte Einparken hinweisende, optisch sichtbare Erscheinung erzeugt wird, oder
• bei einem beabsichtigten Ausparken des Kraftfahrzeugs (K1) auf einen Fahrstreifen (FS) zumindest im Bereich eines dem Fahrstreifen (FS) zugewandten, hinteren Eckbereichs des Kraftfahrzeugs (K1) mehrere vollflächig ausgeleuchtete Lichtsegmente (17) auf der befahrbaren Fläche (F) erzeugt werden und auf der umlaufenden Anzeigeeinrichtung (24) zumindest im hinteren Eckbereich wenigstens eine auf das beabsichtigte Ausparken hinweisende, optische Erscheinung erzeugt wird, wobei durch die Anzeigeeinrichtung (24) eine Anzeigefläche ausgebildet wird und die optische Erscheinung auf der Anzeigefläche durch ein Aufleuchten (31) gebildet wird oder
• bei einem beabsichtigten Ausparken des Kraftfahrzeugs (K1) auf einen Fahrstreifen (FS) auf der neben dem Kraftfahrzeug (K1) befindlichen befahrbaren Fläche (F) des Fahrstreifens (FS) Konturen (27a, 27b) erzeugt werden, die einen herannahenden Verkehrsteilnehmer (K2) auf das beabsichtigte Ausparken des Kraftfahrzeugs (K1) hinweisen und zugleich zum Einfahren in die freiwerdende Parklücke einladen, wobei die Geschwindigkeit des herannahenden Verkehrsteilnehmers (K2) gemessen wird und die zum Einfahren in die Parklücke einladenden Konturen (27a) nur dann erzeugt werden, sobald die Geschwindigkeit des Verkehrsteilnehmers (K2) einen bestimmten Grenzwert unterschreitet.oder
• bei einem während der Fahrt beabsichtigten Fahrstreifenwechsel des Kraftfahrzeugs (K1) auf einen anderen Fahrstreifen (FS') zumindest im Bereich eines dem anderen Fahrstreifen (FS') zugewandten, hinteren Eckbereichs des Kraftfahrzeugs (K1) mehrere vollflächig ausgeleuchtete Lichtsegmente (17) auf der befahrbaren Fläche (F) erzeugt werden und auf der umlaufenden Anzeigeeinrichtung (24) zumindest in einem dem anderen Fahrstreifen (FS') zugewandten, hinteren Bereich wenigstens eine auf den beabsichtigten Fahrstreifenwechsel hinweisende, optische Erscheinung erzeugt wird, wobei durch die Anzeigeeinrichtung (24) eine Anzeigefläche ausgebildet wird und die optische Erscheinung auf der Anzeigefläche durch ein Aufleuchten (31) gebildet wird oder
• bei einem während der Fahrt beabsichtigten Fahrstreifenwechsel des Kraftfahrzeugs (K1) auf einen anderen Fahrstreifen (FS') auf diesem Fahrstreifen (FS') neben dem Kraftfahrzeug (K1) eine Kontur (27) erzeugt wird, deren Umriss in etwa dem Umriss des Kraftfahrzeugs (K1) entspricht und auf der umlaufenden Anzeigeeinrichtung (24) zumindest heckseitig wenigstens eine auf den beabsichtigten Fahrstreifenwechsel hinweisende, optische Erscheinung erzeugt wird.

2. Verfahren nach Anspruch 1, **dadurch gekennzeichnet, dass** das wenigstens eine vollflächig ausgeleuchtete Lichtsegment (17) von einem ein Mikrolinsenarray (163) aufweisendes Projektionsmodul (16) erzeugt wird.

3. Verfahren nach Anspruch 1 oder 2, **dadurch gekennzeichnet, dass** die wenigstens eine Kontur (27, 27a, 27b) durch einen bewegten, die Kontur (27, 27a, 27b) ständig abfahrenden Laserstrahl (L) erzeugt wird, wobei die Intensität des Laserstrahls (L) an Umkehrpunkten (U1-U4) der Kontur (27) vermindert wird.

4. Verfahren nach einem der vorhergehenden Ansprüche 1 bis 3, **dadurch gekennzeichnet, dass** bei einem beabsichtigten, rückwärtigen Einparken des Kraftfahrzeugs (K1) in einem Parkstreifen (PS) durch die Anzeigeeinrichtung (24) eine Anzeigefläche ausgebildet wird und die optisch sichtbare Erscheinung auf der Anzeigefläche durch einen alphanumerischen Hinweis (28) gebildet wird, verbunden mit einem grafischen Richtungshinweis (29).

5. Verfahren nach einem der vorhergehenden Ansprüche, **dadurch gekennzeichnet, dass** bei einem beabsichtigten, rückwärtigen Einparken des Kraftfahrzeugs (K1) in einem Parkstreifen (PS) zusätzlich auf der Heckscheibe (21) ein grafischer oder alphanumerischer Hinweis (30) auf das beabsichtigte Einparken erzeugt wird.

6. Verfahren nach einem der vorhergehenden Ansprüche, **dadurch gekennzeichnet, dass** bei einem während der Fahrt beabsichtigten Fahrstreifenwechsel des Kraftfahrzeugs (K1) auf einen anderen Fahrstreifen (FS') durch die Anzeigeeinrichtung (24) eine Anzeigefläche ausgebildet wird und die optische Erscheinung auf der Anzeigefläche durch einen alphanumerischen Hinweis (30) gebildet wird.

7. Verfahren nach einem der vorhergehenden Ansprüche, **dadurch gekennzeichnet, dass** bei einem während der Fahrt beabsichtigten Fahrstreifenwechsel des Kraftfahrzeugs (K1) auf einen anderen Fahrstreifen (FS') auf der Heckscheibe (21) ein grafischer oder alphanumerischer Hinweis (32) auf den beabsichtigten Fahrstreifenwechsel erzeugt wird.

8. Kraftfahrzeug (K1) zur Durchführung des Verfahrens nach einem der vorhergehenden Ansprüche, mit mehreren, um das Kraftfahrzeug (K1) herum angeordneten Projektionsmodulen (16), welche jeweils wenigstens ein Mikrolinsenarray (163) aufweisen, wobei durch jedes einzelne Projektionsmodul (16) auf einer befahrbaren Fläche (F) neben dem Kraftfahrzeug (K1) ein vollflächig ausgeleuchtetes Lichtsegment (17) und durch die Gesamtheit aller Projektionsmodule (16) ein das Kraftfahrzeug (K1) umschließendes, aus den Lichtsegmenten (17) bestehendes Lichterscheinungsbild erzeugbar ist und mit mehreren Laserscannern (18), wobei durch jeden einzelnen Laserscanner (18) ein bewegter Laserstrahl (L) und damit beliebige Flächen umspannende Konturen (27, 27a, 27b) auf der befahrbaren Fläche (F) neben dem Kraftfahrzeug (K1) erzeugbar sind und wobei durch die Laserscanner (18) die Konturen (27, 27a, 27b) an verschiedenen Winkelpositionen um das Kraftfahrzeug (K1) herum erzeugbar sind und mit einer längs um das Kraftfahrzeug (K1) umlaufenden oder nahezu umlaufenden Anzeige- und/oder Lichterzeugungseinrichtung (24).

9. Kraftfahrzeug (K1) nach Anspruch 8, **dadurch gekennzeichnet, dass** die Anzeige- und/oder Lichterzeugungseinrichtung (24) als Display und/oder LED-Streifen ausgebildet ist.

## Claims

1. Method for the communication of a motor vehicle (K1) with a traffic participant (K2, P, FF) such that the traffic participant (K2, P, FF) is informed about a planned maneuver of the motor vehicle (K1), wherein, on a drivable surface (F) and/or on the motor vehicle (K1) itself, at least one optically visible image is generated, wherein the optically visible image is implemented by the motor vehicle (K1) in the case of an intended change of the motor vehicle (K1) into a specific driving lane (PS, FS or FS') of a drivable surface (F) or in the case of an intended change from a driving lane (FS) of a drivable surface (F) into a parking lane (PS), such that a light image consisting of at least one light segment (17) illuminated over the full area or of at least one contour (27, 27a, 27b) delimiting a surface is generated on the drivable surface (F) and/or the optically visible image is formed on at least one display or light-generating device (24) that is longitudinally circumferential or nearly circumferential around the motor vehicle (K1), **characterized in that**
• in the case of an intended rearward parking of the motor vehicle (K1) into a parking lane (PS) on the side of the motor vehicle (K1) facing the parking lane (PS), a plurality of light segments (17) illuminated over the full area are generated on the drivable surface (F), and at least one optically visible image indicating the intended parking is generated on the circumferential display device (24), at least on the rear side, wherein a display surface is formed by the display device (24) and the optically visible image is formed on the display surface by an alphanumeric indication (28), in conjunction with an illumination (31) of a part of the display surface facing the parking lane (PS), or
• in the case of an intended rearward parking of the motor vehicle (K1) into a parking lane (PS) at a distance (a2) behind the motor vehicle (K1), a contour (27) delimiting a surface is generated, wherein the distance (a2) is dimensioned such that, in the event of a traffic participant stopping in front of the contour (27), there remains sufficient maneuvering room for the motor vehicle (K1) to park, and at least one optically visible image indicating the intended parking is generated on the circumferential display device (24), at least on the rear side, or
• in the case of an intended exit of the motor vehicle (K1) from parking into a driving lane (FS), a plurality of light segments **(17)** illuminated over the full area is generated on the drivable surface (F), at least in the region of a rear corner region of the motor vehicle (K1) facing the driving lane (FS), and at least one optical image indicating the intended exit from the parking is generated on the circumferential display device (24), at least in the rear corner region, wherein a display surface is formed by the display device (24) and the optical image is formed on the display surface by illumination (31), or
• in the case of an intended exit of the motor vehicle (K1) from parking into a driving lane (FS), contours (27a, 27b) are generated on the drivable surface (F) of the driving lane (FS) located next to the motor vehicle (K1), which contours indicate to an approaching traffic participant (K2) the intended exit of the motor vehicle (K1) from parking and at the same time invite said participant to enter the parking space that is being vacated, wherein the speed of the approaching traffic participant (K2) is measured and the contours (27a) inviting entry into the parking space are only generated as soon as the speed of the traffic participant (K2) falls below a certain limit value, or
• in the case of a driving lane change of the motor vehicle (K1) to a different driving lane (FS') intended during the trip, a plurality of light segments (17) illuminated over the full area is generated on the drivable surface (F), at least in the region of a rear corner region of the motor vehicle (K1) facing the other driving lane (FS'), and at least one optical image indicating the intended driving lane change is generated on the circumferential display device (24), at least in a rear region facing the other driving lane (FS'), wherein a display surface is formed by the display device (24) and the optical image is formed on the display surface by illumination (31), or
• in the case of a driving lane change of the motor vehicle (K1) to a different driving lane (FS') intended during the trip, a contour (27), the outline of which corresponds approximately to the outline of the motor vehicle (K1), is generated in this driving lane (FS') next to the motor vehicle (K1), and at least one optical image indicating the intended driving lane change is generated on the circumferential display device (24), at least on the rear side.

2. Method according to claim 1, **characterized in that** the at least one light segment (17) illuminated over the full area is generated by a projection module (16) having a microlens array (163).

3. Method according to claim 1 or 2, **characterized in that** the at least one contour (27, 27a, 27b) is generated by a moving laser beam (L) continuously traveling along the contour (27, 27a, 27b), wherein the intensity of the laser beam (L) is reduced at reversal points (U1-U4) of the contour (27).

4. Method according to any of the preceding claims 1 to 3,
**characterized in that,** in the case of an intended rearward parking of the motor vehicle (K1) in a parking lane (PS), a display surface is formed by the display device (24), and the optically visible image on the display surface is formed by an alphanumeric indication (28) in conjunction with a graphical direction indication (29).

5. Method according to any of the preceding claims, **characterized in that,** in the case of an intended rearward parking of the motor vehicle (K1) in a parking lane (PS), a graphical or alphanumeric indication (30) of the intended parking is additionally generated on the rear window (21).

6. Method according to any of the preceding claims, **characterized in that,** in the case of a driving lane change of the motor vehicle (K1) to another driving lane (FS') intended during the trip, a display surface is formed by the display device (24) and the visual image on the display surface is formed by an alphanumeric indication (30).

7. Method according to any of the preceding claims, **characterized in that,** in the case of a driving lane change of the motor vehicle (K1) to another driving lane (FS') intended during the trip, a graphical or alphanumeric indication (32) of the intended driving lane change is generated on the rear window (21).

8. Motor vehicle (K1) for carrying out the method according to any of the preceding claims, comprising a plurality of projection modules (16) arranged around the motor vehicle (K1), each having at least one microlens array (163), wherein a light segment (17) illuminated over the full area can be generated by each individual projection module (16) on a drivable surface (F) next to the motor vehicle (K1), and a light image, which surrounds the motor vehicle (K1) and consists of the light segments (17), can be generated by the entirety of all the projection modules (16), and comprising a plurality of laser scanners (18), wherein a moving laser beam (L) and contours (27, 27a, 27b) that encompass any surfaces can be generated on the drivable surface (F) next to the motor vehicle (K1) by each individual laser scanner (18), and wherein the contours (27, 27a, 27b) can be generated by the laser scanners (18) at different angular positions around the motor vehicle (K1), and comprising a display and/or light generation device (24) that is longitudinally circumferential or nearly circumferential around the motor vehicle (K1).

9. Motor vehicle (K1) according to claim 8, **characterized in that** the display and/or light generating device (24) is designed as a display and/or as an LED strip.

## Revendications

1. Procédé permettant la communication d'un véhicule automobile (K1) avec un usager de la route (K2, P, FF) de telle sorte que l'usager de la route (K2, P, FF) est informé d'une manœuvre planifiée du véhicule automobile (K1), au moins un phénomène optiquement visible étant produit sur une surface praticable (F) et/ou sur le véhicule automobile (K1) lui-même, le phénomène optiquement visible étant effectué par le véhicule automobile (K1) lors d'un changement prévu du véhicule automobile (K1) dans une voie de circulation (PS, FS ou FS') déterminée d'une surface praticable (F) ou lors d'un changement prévu d'une voie de circulation (FS) d'une surface praticable (F) vers une bande de stationnement (PS), de telle sorte qu'une image de phénomène lumineux constituée d'au moins un segment lumineux (17) entièrement éclairé ou d'au moins un contour (27, 27a, 27b) délimitant une surface est produite sur la surface praticable (F) et/ou le phénomène optiquement visible est formé sur au moins un dispositif d'affichage ou de production de lumière (24) périphérique ou presque périphérique longitudinalement autour du véhicule automobile (K1), **caractérisé en ce que**
• lors d'un stationnement arrière prévu du véhicule automobile (K1) dans une bande de stationnement (PS), plusieurs segments lumineux (17) entièrement éclairés sont produits sur la surface praticable (F), du côté du véhicule automobile (K1) tourné vers la bande de stationnement (PS), et au moins un phénomène optiquement visible indiquant le stationnement prévu est produit sur le dispositif d'affichage (24) périphérique, au moins côté arrière, une surface d'affichage étant formée par le dispositif d'affichage (24) et le phénomène optiquement visible étant formé sur la surface d'affichage par une indication alphanumérique (28) reliée à un éclairage (31) d'une partie de la surface d'affichage tournée vers la bande de stationnement (PS) ou
• lors d'un stationnement arrière prévu du véhicule automobile (K1) dans une bande de stationnement (PS), un contour (27) délimitant une surface est produit à une distance (a2) derrière le véhicule automobile (K1), la
distance (a2) étant dimensionnée de telle sorte que, dans le cas où un usager de la route s'arrête devant le contour (27), le véhicule automobile (K1) dispose d'un espace de manœuvre suffisant pour le stationnement et au moins un phénomène optiquement visible indiquant le stationnement prévu est produit sur le dispositif d'affichage (24) périphérique, au moins côté arrière, ou
• lors d'une sortie de stationnement prévue du véhicule automobile (K1) sur une voie de circulation (FS), plusieurs segments lumineux (17) entièrement éclairés sont produits sur la surface praticable (F), au moins dans la zone d'une zone de coin arrière du véhicule automobile (K1) tournée vers la voie de circulation (FS), et au moins un phénomène optique indiquant la sortie de stationnement prévue est produit sur le dispositif d'affichage (24) périphérique, au moins dans la zone de coin arrière, une surface d'affichage étant formée par le dispositif d'affichage (24) et le phénomène optique étant formé par un éclairage (31) sur la surface d'affichage ou
• lors d'une sortie de stationnement prévue du véhicule automobile (K1) sur une voie de circulation (FS), des contours (27a, 27b) sont produits sur la surface praticable (F) de la voie de circulation (FS) se trouvant à côté du véhicule automobile (K1), lesquels contours indiquent à un usager de la route (K2) en approche la sortie de stationnement prévue du véhicule automobile (K1) et invitent en même temps à l'entrée dans la place de stationnement libérée, la vitesse de l'usager de la route (K2) en approche étant mesurée et les contours (27a) invitant à l'entrée dans la place de stationnement n'étant produits que lorsque la vitesse de l'usager de la route (K2) est inférieure à une valeur limite déterminée ou
• lors d'un changement de voie de circulation du véhicule automobile (K1) prévu pendant la conduite vers une autre voie de circulation (FS'), plusieurs segments lumineux (17) entièrement éclairés sont produits sur la surface praticable (F), au moins dans la zone d'une zone de coin arrière du véhicule automobile (K1) tournée vers l'autre voie de circulation (FS'), et au moins un phénomène optique indiquant le changement de voie de circulation prévu est produit sur le dispositif d'affichage (24) périphérique, au moins dans une zone arrière tournée vers l'autre voie de circulation (FS'), une surface d'affichage étant formée par le dispositif d'affichage (24) et le phénomène optique étant formé par un éclairage (31) sur la surface d'affichage ou
• lors d'un changement de voie de circulation du véhicule automobile (K1) prévu pendant la conduite vers une autre voie de circulation (FS'), un contour (27) est produit sur ladite voie de circulation (FS') à côté du véhicule automobile (K1), le périmètre dudit contour correspond approximativement au périmètre du véhicule automobile (K1), et au moins un phénomène optique indiquant le changement de voie de circulation prévu est produit sur le dispositif d'affichage (24) périphérique, au moins côté arrière.

2. Procédé selon la revendication 1, **caractérisé en ce que** l'au moins un segment lumineux (17) entièrement éclairé est produit par un module de projection (16) présentant un réseau de microlentilles (163).

3. Procédé selon la revendication 1 ou 2, **caractérisé en ce que** l'au moins un contour (27, 27a, 27b) est produit par un faisceau laser (L) mobile balayant en permanence le contour (27, 27a, 27b), l'intensité du faisceau laser (L) étant diminuée au niveau de points d'inversion (U1-U4) du contour (27).

4. Procédé selon l'une des revendications précédentes 1 à 3,
**caractérisé en ce que,** lors d'un stationnement arrière prévu du véhicule automobile (K1) dans une bande de stationnement (PS), une surface d'affichage est formée par le dispositif d'affichage (24) et le phénomène optiquement visible est formé sur la surface d'affichage par une indication alphanumérique (28) reliée à une indication de direction graphique (29).

5. Procédé selon l'une des revendications précédentes, **caractérisé en ce que,** lors d'un stationnement arrière prévu du véhicule automobile (K1) dans une bande de stationnement (PS), une indication graphique ou alphanumérique (30) concernant le stationnement prévu est en outre produite sur la lunette arrière (21).

6. Procédé selon l'une des revendications précédentes, **caractérisé en ce que,** lors d'un changement de voie de circulation du véhicule automobile (K1) prévu pendant la conduite vers une autre voie de circulation (FS'), une surface d'affichage est formée par le dispositif d'affichage (24) et le phénomène optique est formé sur la surface d'affichage par une indication alphanumérique (30).

7. Procédé selon l'une des revendications précédentes, **caractérisé en ce que,** lors d'un changement de voie de circulation du véhicule automobile (K1) prévu pendant la conduite vers une autre voie de circulation (FS'), une indication graphique ou alphanumérique (32) concernant le changement de voie de circulation prévu est produite sur la lunette arrière (21).

8. Véhicule automobile (K1) permettant de mettre en œuvre le procédé selon l'une des revendications précédentes, comportant plusieurs modules de projection (16) disposés autour du véhicule automobile (K1) et présentant respectivement au moins un réseau de microlentilles (163), un segment lumineux (17) entièrement éclairé pouvant être produit par chaque module de projection (16) individuel sur une surface praticable (F) à côté du véhicule automobile (K1) et, grâce à l'ensemble de tous les modules de projection (16), une image de phénomène lumineux constituée des segments lumineux (17) et entourant le véhicule automobile (K1) pouvant être produite, et comportant plusieurs scanners laser (18), un faisceau laser (L) mobile et ainsi des contours (27, 27a, 27b) couvrant des surfaces quelconques pouvant être produits par chaque scanner laser (18) individuel sur la surface praticable (F) à côté du véhicule automobile (K1) et les contours (27, 27a, 27b) pouvant être produits par les scanners laser (18) dans différentes positions angulaires autour du véhicule automobile (K1), et comportant un dispositif d'affichage et/ou de production de lumière (24) périphérique ou presque périphérique longitudinalement autour du véhicule automobile (K1).

9. Véhicule automobile (K1) selon la revendication 8, **caractérisé en ce que** le dispositif d'affichage et/ou de production de lumière (24) est réalisé en tant qu'écran et/ou bande DEL.
